# EUROPEAN PATENT APPLICATION

(11) **EP 2 631 801 A1**
(43) Date of publication of application: **28.08.2013**
(21) Application number: 10858634.8
(22) Date of filing: 20.10.2010
(51) Int. Cl.: G06F 9/54, G06F 11/20

(54) **INFORMATION PROCESSING SYSTEM, RECORDING DEVICE, INFORMATION PROCESSING DEVICE, AND METHOD FOR CONTROLLING INFORMATION PROCESSING SYSTEM**

(71) Applicant: Fujitsu Limited, Kawasaki-shi, Kanagawa 211-8588 (JP)
(72) Inventor: SANO, Yoshihiko, Kawasaki-shi Kanagawa 211-8588 (JP)
(74) Representative: HOFFMANN EITLE
(86) International application number: PCT/JP2010/068513
(87) International publication number: WO 2012/053078

(57) **Abstract**

A shared memory device transmits information indicating the validity of data to be stored to each information processing apparatus, and acquires information indicating the validity of data that each shared memory device stores. Further, the shared memory device acquires information indicating the on-line state between each information processing device and each shared memory device, and determines whether the multiplexing of the data that the shared memory device stores is guaranteed based on the acquired information.

## Description

### TECHNICAL FIELD

The present invention relates to an information processing system, a memory device, an information processing apparatus, and a method of controlling the information processing system.

### BACKGROUND ART

There has been known a complex computer system (cluster system) in which plural information processing apparatuses such as servers are connected to a shared memory. Further, in the shared memory, a cluster monitor control table, in which information indicating whether other information processing apparatuses are up and running for each information processing apparatus, is provided and managed.

Further, there has been also known a complex computer system in which plural information processing apparatuses are connected to the shared memory, so that the communications between the plural information processing apparatuses and the shared memory are performed via ports of the shared memory and a control memory having one bit indicating whether the port is valid or invalid for each of the ports is provided in the shared memory.

### PRIOR ART DOCUMENT

### PATENT DOCUMENT

Patent Document 1: Japanese Laid-open Patent Publication No. H04-060750

### SUMMARY OF THE INVENTION

### PROBLEM SOLVED BY THE INVENTION

In an information processing system in which plural sheared memory devices are shared by plural information processing apparatuses, an object of the present invention is to provide a configuration to promptly determine whether the shared memory devices are in an on-line state (mode) and effectively achieve to secure data consistency among the shared memory devices.

### MEANS FOR SOLVING THE PROBLEMS

According to an embodiment, a shared memory device transmits information indicating the validity of data to be stored to each information processing apparatus, and acquires information indicating the validity of data that each shared memory device stores. Further, the shared memory device acquires information indicating the on-line state between each information processing device and each shared memory device, and determines whether the multiplexing of the data that the shared memory device stores is guaranteed based on the acquired information.

### EFFECT OF THE INVENTION

In an information processing system in which plural sheared memory devices are shared by plural information processing apparatuses, it may become possible to provide a configuration to promptly determine whether the shared memory devices are in an on-line state and effectively achieve to secure data consistency among the shared memory devices.

### BRIEF DESCRIPTION OF DRAWINGS

FIG. 1 is a drawing of a system configuration of an information processing system to which an embodiment is applicable;
FIG. 2A is a first drawing illustrating a problem that may occur in the information processing system of FIG. 1;
FIG. 2B is a second drawing illustrating the problem that may occur in the information processing system of FIG. 1;
FIG. 3 is a drawing illustrating an example configuration of an information processing system according to an embodiment;
FIG. 4 is a drawing illustrating the transmission of on-line register information in the example configuration in FIG. 3;
FIG. 5A is a drawing illustrating the transmission of data validity flag information in the example configuration in FIG. 3;
FIG. 5B is a drawing illustrating the transmission of data validity information register information in the example configuration in FIG. 3;
FIG. 6A is a first circuit diagram illustrating an example configuration of a multiplexing guarantee check circuit according to an embodiment;
FIG. 6B is a second circuit diagram illustrating the example configuration of the multiplexing guarantee check circuit according to the embodiment;
FIG. 7A is a first drawing illustrating an example operation when the contents of the on-line register and an on-line information table are changed according to an embodiment;
FIG. 7B is a second drawing illustrating the example operation when the contents of the on-line register and the on-line information table are changed according to the embodiment;
FIG. 7C is a third drawing illustrating the example operation when the contents of the on-line register and the on-line information table are changed according to the embodiment;
FIG. 8A is a first drawing illustrating an example operation when the contents of the data validity flag, the data validity register, and the data validity information table are changed according to an embodiment;
FIG. 8B is a second drawing illustrating the example operation when the contents of the data validity flag, the data validity register, and the data validity information table are changed according to the embodiment;
FIG. 8C is a third drawing illustrating the example operation when the contents of the data validity flag, the data validity register, and the data validity information table are changed according to the embodiment;
FIG. 8D is a fourth drawing illustrating the example operation when the contents of the data validity flag, the data validity register, and the data validity information table are changed according to the embodiment;
FIG. 9A is a first drawing illustrating an example operation of multiplexing guarantee check according to an embodiment;
FIG. 9B is a second drawing illustrating the example operation of multiplexing guarantee check according to the embodiment;
FIG. 9C is a third drawing illustrating the example operation of multiplexing guarantee check according to the embodiment;
FIG. 10A is a first drawing illustrating a first example operation of multiplexing guarantee restoration according to an embodiment;
FIG. 10B is a second drawing illustrating the first example operation of multiplexing guarantee restoration according to the embodiment;
FIG. 10C is a third drawing illustrating the first example operation of multiplexing guarantee restoration according to the embodiment;
FIG. 11A is a first drawing illustrating a second example operation of multiplexing guarantee restoration according to an embodiment;
FIG. 11B is a second drawing illustrating the second example operation of multiplexing guarantee restoration according to the embodiment;
FIG. 11C is a third drawing illustrating the second example operation of multiplexing guarantee restoration according to the embodiment;
FIG. 12 is a flowchart illustrating an operation performed by a server according to an embodiment;
FIG. 13 is a flowchart illustrating an operation performed by a shared memory device according to an embodiment;
FIG. 14 is a functional block diagram illustrating functions of the server according to an embodiment;
FIG. 15 is a functional block diagram illustrating functions of the shared memory device according to an embodiment; and
FIG. 16 is a block diagram illustrating an example configuration of the entire server according to an embodiment; and
FIG. 17 is a block diagram illustrating an example configuration of the entire shared memory device according to an embodiment.

### BEST MODE FOR CARRYING OUT THE INVENTION

### First embodiment

A first embodiment relates to an information processing apparatus in which plural servers are mutually connected and accessible to plural shared memory devices. In the information processing system, each of the plural shared memory devices is shared by the plural servers. Further, in the information processing system, data stored in the shared memory devices are maintained to be the same as that stored in any other shared memory devices. As a result, even if one of the plural shared memory devices fails due to an occurrence of an error and data in the shared memory device is not used, it is still possible to use the same data that are stored in the shared memory device other than the failed shared memory device. As a result, the operation of the information processing system may be continuously operated. Therefore, the reliability of the information processing system may be improved. Here, a process so as to set the data stored in each of the plural shared memory devices to be the same as those among the plural shared memory devices with each other is called "multiplexing", and to guarantee a state that the multiplexed data are the same as each other is called "multiplexing guarantee".

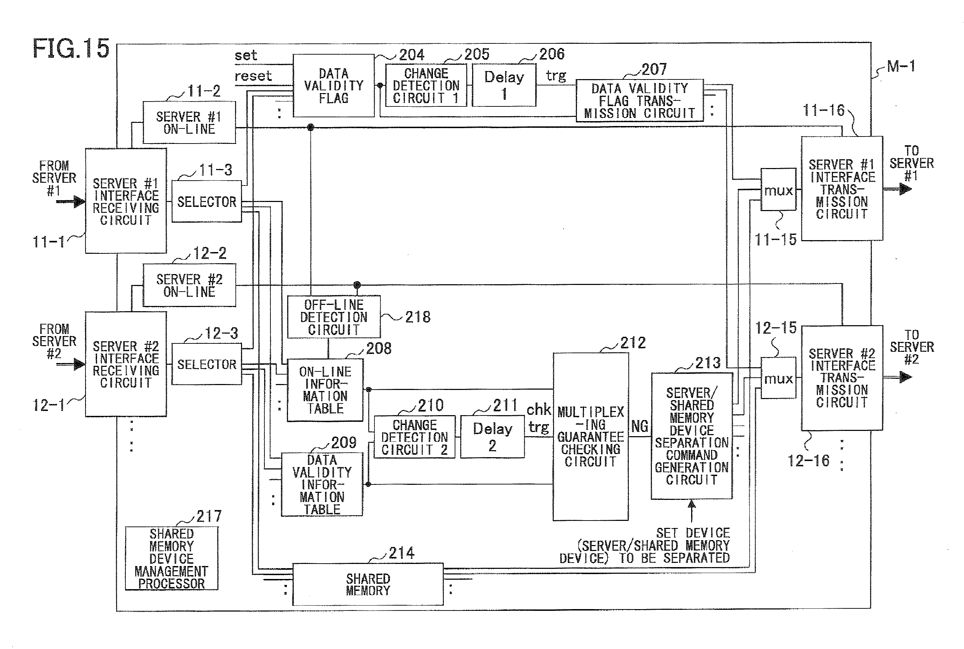

In the first embodiment, by transmitting on-line information possessed by each server and a data validity flag information possessed by the shared memory devices between the servers and the shared memory devices, the on-line information and the data validity flag information are aggregated into each of the shared memory devices. Further, each shared memory device checks whether the multiplexing guarantee state is maintained based on the aggregated on-line information and the data validity flag information. As a result of this check, when it is determined that the multiplexing guarantee is lost, the degeneration is performed by separating the server or the shared memory device which may be a cause of the failure from the system, so as to restore the multiplexing guarantee state. Here, the term "on-line information" possessed by the servers refers to information indicating whether the state between each server and the plural shared memory devices is in on-line state (mode) ("on-line") or off-line state (mode) ("off-line"). The term "on-line state" refers to a state where apparatuses are physically or logically connected to each other, and the term the "off-line state" refer to a state where apparatuses are not physically or logically connected to each other. The data validity flag possessed by each shared memory device refers to a flag indicating whether the data stored in the shared memory device is valid or invalid on the system. The value of the data validity flag is set by each server or a shared memory management processor (described below with reference to FIG. 15) possessed by the shared memory device.

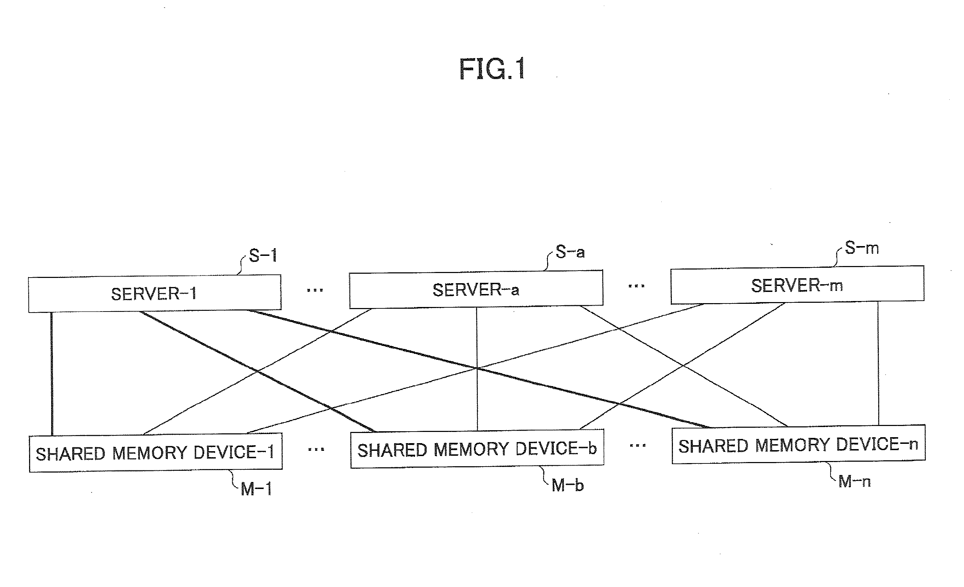

FIG. 1 illustrates an example configuration of an information processing system to which the first embodiment may be applied. The information processing system includes m servers S-1, ..., S-a, ..., and S-m (m: an integer greater than one) and n shared memory devices M-1, ..., M-b, ..., and M-n (n: an integer greater than one). Further, the m servers and n shared memory devices are provided in a manner such that each of the m servers is communicably connected to the n shared memory devices. The m servers share the data stored in the n shared memory devices. Further, any of the m servers may transmit and receive data to and from any of the rest of the m servers via the n shared memory devices. Further, the data stored in the n shared memory devices are "multiplexed".

In the configuration of FIG. 1, when a certain server stores data in the shared memory devices, the server simultaneously transmits the same data to each of the n shared memory devices.

As a result, the data are multiplexed (data multiplexing is achieved) among the n shared memory devices. Further, when a certain server reads (fetches) data from the shared memory device, the server reads from any one of the n shared memory devices. When the data multiplexing is achieved, that is when the multiplexing guarantee is maintained, the same data are read no matter which of the n shared memory devices is used to read the data.

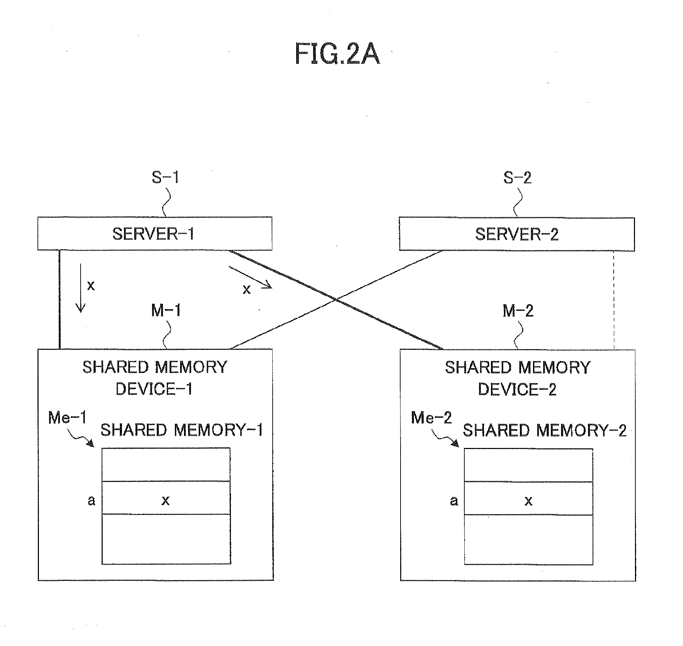

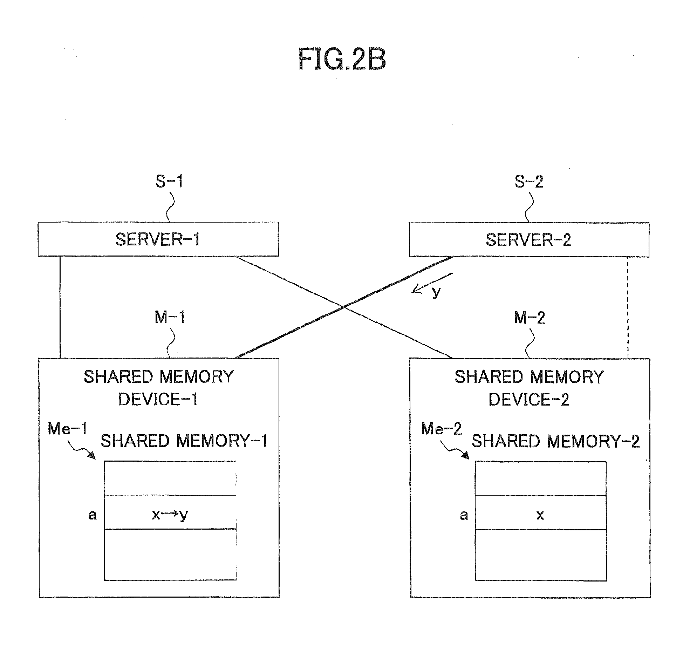

Here, a case is assumed where any one of the shared memory devices becomes off-line from each of the servers. Even in such a case, when the shared memory devices match with each other, the data multiplexing may be performed among the shared memory devices. On the other hand, if the shared memory devices which are on-line with each of the servers do not match with each other, the data may not be matched among the shared memory devices and the data multiplexing may not be achieved. This point is described with reference to FIGS. 2A and 2B.

FIG. 2A illustrates an example system configuration in which two servers S-1 and S-2 share (commonly use) the data of two shared memory devices M-1 and M-2. Here, as illustrated in FIG. 2A, it is assumed that the server 1 is on-line with both the shared memory devices M-1 and M-2, and the server 2 is on-line with the shared memory device M-1 but is off-line with the shared memory device M-2. In the figures, the solid line denotes the on-line state, and the dotted line denotes the off-line state. Namely, in this case, the server S-1 is on-line with both the shared memory devices M-1 and M-2, but the server S-2 is on-line with only the shared memory device M-1. Therefore, there is a difference. Namely, the on-line state between the server S-1 and the shared memory devices M-1 and M-2 does not match the on-line state between the server S-2 and the shared memory devices M-1 and M-2.

Under this condition, as exemplarily illustrated in FIG. 2A, a case is considered where the server S-1 stores data x in address a of the shared memory device. As described above, the server S-1 is on-line with both the shared memory devices M-1 and M-2. Therefore, the server S-1 stores the same data x in address a of both the shared memory Me-1 and Me-2 of the shared memory devices M-1 and M-2. As a result the data x are multiplexed between the shared memory devices M-1 and M-2, so that each of the servers S-1 and S-2 may acquire (read) the same data x by accessing the address a of either the shared memory Me-1 or the shared memory Me-2 of the shared memory device M-1 or the shared memory device M-2, respectively.

Here, next, it is assumed that the server S-2 stores data y in the address a of the shared memory Me-1 of the shared memory device M-1 (FIG. 2B). As described, the server 2 is on-line only with the shared memory devices M-1 and is off-line with the shared memory devices M-2. Therefore, the server 2 may store the data y in the address a of the shared memory Me-1 of the shared memory device M-1, but never stores the data y in the address a of the shared memory Me-2 of the shared memory device M-2. As a result, the data x stored in the address a of the shared memory Me-2 of the shared memory device M-2 is maintained as it is. Therefore, when the server S-1 accesses the address a of the shared memory Me-1 of the shared memory device M-1 and the shared memory Me-2 of the shared memory device M-2, the serer S-1 may acquire either the data x or the data y, which are different from each other. From the server S-1's point of view, this is a phenomenon that may be caused by the data inconsistency between the data stored in the shared memory device M-1 and the data stored in the shared memory device M-2. Further, the data inconsistency between the shared memories is caused by the inconsistency in an on-line state of the shared memory devices M-1 and M-2 which are disposed between the servers S-1 and S-2.

In the first embodiment, the servers S-1 and S-2 determine whether there exists inconsistency in an on-line state between the server S-1 and the server S-2 with shared memory devices M-1 and M-2. Then, when it is determined that there exist such inconsistency in the on-line state, the server or the shared memory device that may cause the inconsistency due to its failure is separated from the system. By doing this, the on-line state between the server S-1 and the server S-2 with shared memory devices M-1 and M-2 is ensured. As a result, the data inconsistency between the shared memory devices M-1 and M-2 may be prevented. From the view point of the servers S-1 and S-2, to verify whether the conditions of data consistency between the shared memory devices M-1 and M-2 are satisfied is herein called "multiplexing guarantee check". Further, to fulfill the conditions of the multiplexing guarantee check (satisfying the data consistency) is herein called "multiplexing guarantee restoration".

In cases of FIGS. 2A and 2B, as described above, there is inconsistency in on-line state of the shared memory devices M-1 and M-2 between the servers S-1 and S-2. In such a state, as described with reference to FIG. 2B, from the view point of the servers S-1 and S-2, the data inconsistency may occur between the shared memory devices M-1 and M-2. Therefore, in this case, the conditions of the multiple guarantee are not satisfied. Here, to perform the multiplexing guarantee restoration, that is to prevent causing the data inconsistency between the shared memory devices M-1 and M-2 from the view point of the servers S-1 and S-2, it is desired to match the on-line state with respect to the shared memory devices M-1 and M-2 between the servers S-1 and S-2. To that end, for example, there is a method to separate the shared memory device M-2 as "system off-line". Herein, the system off-line of the shared memory device refers to a state that the shared memory device is off-line with all the servers included in the system. In the case of FIGS. 2A and 2B, it is desired that the server S-1 is off-line with the shared memory device M-2. As a result, the shared memory device M-2 becomes off-line with both the servers S-1 and S-2, so that the shared memory device M-2 becomes system off-line. As a result, the on-line state with respect to the shared memory devices M-1 and M-2 from the view point of the servers S-1 and S-2 is matched with each other, so that the on-line state from the view point of the servers S-1 and S-2 becomes a state where "each of the servers S-1 and S-2 is on-line with the shared memory device M-1 and off-line with the shared memory device M-2". Under this state, from the view point of the servers S-1 and S-2, the occurrence of data inconsistency in shared memory device M-1 may be prevented. Therefore, the multiplexing guarantee restoration is achieved.

As another method to achieve the multiplexing guarantee restoration, the server 2 may be off-line from the system (system off-line). Herein, the system off-line of a server refers to a state where the server is off-line state with all the shared memory devices included in the system. Namely, the server S-2 is off-line with the shared memory device M-1. As a result, the server M-2 is off-line with all the two shared memory devices M-1 and M-2 included in the system, so that the server M-2 is system off-line. As described, by setting the server S-2 to be system off-line, the server S-2 is unable to access any of the shared memory devices M-1 and M-2. Therefore, the data inconsistency, which is between the shared memory devices M-1 and M-2, caused by the operation of the server S-2 may not occur. Therefore, from the view point of the server S-1, the data inconsistency between the shared memory devices M-1 and M-2 does not occur. Accordingly, the multiplexing guarantee restoration state may be achieved. By considering this point, in this first embodiment, the condition of the multiplexing guarantee is defined as "the on-line state of the shared memory device M-1 is matched with the on-line state of the shared memory device M-2 among all the servers except a server which is system off-line". By defining this, as described above, in a state where the server S-2 is system off-line, all the servers except a server which is system off-line (i.e., the server S-2) is only the server S-1. Therefore, the above condition that "the on-line state of the shared memory device M-1 is matched with the on-line state of the shared memory device M-2 among all the servers (i.e. server S-1) except a server which is system off-line (i.e. server S-2)" is fulfilled, thereby the multiplexing guarantee restoration state is achieved.

Further, in the first embodiment, it is desired to use hardware to perform an operation of transmitting the on-line information and the data validity flag information between the servers and the shared memory devices and an operation of the multiplexing guarantee checking. This is because, while, for example, it takes only microseconds to perform on-line/offline control between the server and the shared memory device, if software is used to perform the multiplexing guarantee checking, it may take several milliseconds (ms) due to the use of the software. As a result, the delay may be increased when compared with a case of using the hardware.

Here, for the sake of comparison, a case is assumed where software is used to perform the multiplexing guarantee checking or the like. Here, a system is assumed that is capable of dynamically setting off-line/on-line to any of the servers and shared memory devices based on a program running on the server. In this system, if switching between on-line and off-line in a short period, it is thought that the operation of the multiplexing guarantee checking by software may not follow up. Namely, the state of "multiplex is guaranteed" may be already established at the time point when the multiplexing guarantee checking operation by software is completed. On the other hand, as a result of multiplexing guarantee checking by software based on the information before the switching between on-line and off-line, an erroneous determination (result) indicating "multiplexing is not guaranteed" may be acquired. In such a case, due to the wrong determination, a wrong operation of separating an apparatus or a device, which is not desired to be separated from the system, from the system (system off-line) may be conducted. In the first embodiment, hardware is used to perform the multiplexing guarantee checking and the like. Therefore, such erroneous determination and erroneous operation may be prevented.

More details of the first embodiment are described below with reference to the drawings.

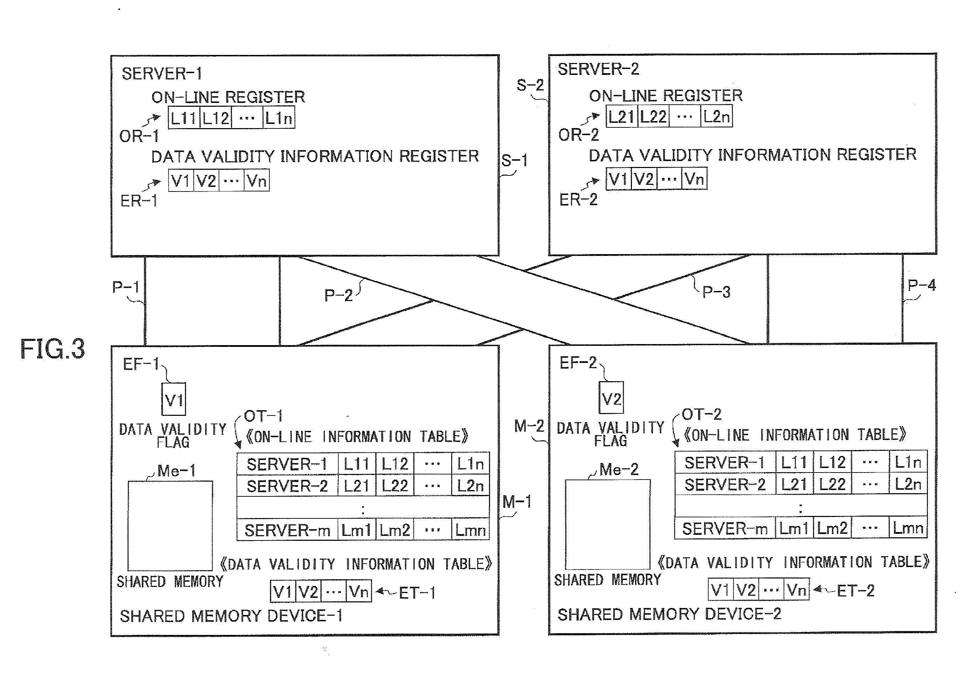

FIG. 3 illustrates functions of the information processing system according to the first embodiment. As illustrated in FIG. 3, similar to FIGS. 2A and 2B, the information processing system includes two servers S-1 and S-2 and two shared memory devices M-1 and M-2. The servers S-1 and S-2 share the data stored in the shared memories Me-1 and Me-2 of the shared memory devices M-1 and M-2, respectively. Further, FIG. 3 illustrates a case where the information processing system including two servers S-1 and S-2 and two shared memory devices M-1 and M-2. However, the number of the servers to be included in the information processing system is not limited to two. As illustrated in FIG. 1, the number of the servers may be three or more. Similarly, the number of the shared memory devices to be included in the information processing system is not limited to two. As illustrated in FIG. 1, the number of the shared memory devices is three or more.

The server S-1 includes an on-line register OR-1, and the server S-2 includes an on-line register OR-2. Each of the on-line registers OR-1 and OR-2 includes the number of bits, which is the same as the number of all the shared memory devices M-1 and M-2 included in the system. Here, in FIG. 3, for example, the symbol "Lab" denotes "the bit indicating the on-line state between the server "a" and the shared memory device "b"". The on-line register OR-1 stores the on-line information of the shared memory devices M-1 and M-2 which correspond to the destinations of data transmissions when the server S-1 multiplexes and stores the data in the shared memory devices M-1 and M-2. Further, the on-line register OR-2 also stores the on-line information of the shared memory devices M-1 and M-2 corresponding to the destinations of data transmissions when the server S-2 multiplexes and stores the data in the shared memory devices M-1 and M-2. Namely, when storing the data in the shared memory devices, the server S-1 refers to the on-line register OR-1 thereof, and transmits the data to be stored to each of the shared memory devices which are indicated as "on-line" by having a value "1" in the corresponding bit in the on-line register OR-1. Also, when storing the data in the shared memory devices, the server S-2 refers to the on-line register OR-2 thereof, and transmits the data to be stored to each of the shared memory devices which are indicated as "on-line" by having a value "1" in the corresponding bit in the on-line register OR-2.

Further, the server S-1 includes a data validity information register ER-1, and the server S-2 includes a data validity information register ER-2. The data validity information register ER-1 stores the values of the data validity flags EF-1 and EF-2 of all the shared memory devices M-1 and M-2, respectively, included in the system. Also, the data validity information register ER-2 stores the values of the data validity flags EF-1 and EF-2 of all the shared memory devices M-1 and M-2, respectively, included in the system.

The servers S-1 and S-2 are connected to the shared memory devices M-1 and M-2 via interfaces (e.g., communications lines). The data storing operation and the data reading (fetching) operation from the servers S-1 and S-2 to the shared memory devices include command and data transmission operations via those interfaces P-1 through P-4.

The shared memory devices M-1 and M-2 include shared memories Me-1 and Me-2, respectively. The shared memory Me-1 stores the data transmitted from the servers S-1 and S-2. Further, the shared memory devices M-1 and M-2 includes the data validity flags EF-1 and EF-2, respectively. The data validity flags EF-1 and EF-2 indicate whether the data that the shared memory devices M-1 and M-2, respectively, stores are valid or invalid.

Further, the shared memory device M-1 includes an on-line information table OT-1, and the shared memory device M-2 includes an on-line information table OT-2. The on-line information table OT-1 stores the information of the on-line registers OR-1 and OR-2, which are possessed by the respective servers S-1 and S-2, on a server basis. Also, the on-line information table OT-2 stores the information of the on-line registers OR-1 and OR-2, which are possessed by the respective servers S-1 and S-2, on a server basis.

Further, the shared memory device M-1 includes a data validity information table ET-1, and the shared memory device M-2 includes a data validity information table ET-2. The data validity information table ET-1 stores information of the data validity information registers ER-1 or ER-2 possessed by the servers S-1 or S-2, respectively. The data validity information table ET-2 stores information of the data validity information registers ER-1 or ER-2 possessed by the servers S-1 or S-2, respectively.

Further, the information processing system of FIG. 3 include the functions described below. Namely, the information of the data validity flag EF-1 of the shared memory device M-1 is transmitted to the servers S-1 and S-2 via interfaces P-1 and P-3, respectively, and stored in the data validity information registers ER-1 and ER-2 of the servers S-1 and S-2, respectively. Similarly, the information of the data validity flag EF-2 of the shared memory device M-2 is transmitted to the servers S-1 and S-2 via interfaces P-2 and P-4, respectively, and stored in the data validity information registers ER-1 and ER-2 of the servers S-1 and S-2, respectively.

Further, the information of the on-line register OR-1 of the server S-1 is transmitted to, via the interfaces P-1 and P-2, and stored in the on-line information tables OT-1 and OT-2 of the shared memory devices M-1 and M-2, respectively. Similarly, the information of the on-line register OR-2 of the server S-2 is transmitted to, via the interfaces P-3 and P-4, and stored in the on-line information tables OT-1 and OT-2 of the shared memory devices M-1 and M-2, respectively.

Further, the information of the data validity information register ER-1 of server S-1 is transmitted to, via the interfaces P-1 and P-2, and stored in the data validity information table ET-1 and ET-2 of the shared memory devices M-1 and M-2, respectively. Similarly, the information of the data validity information register ER-2 of server S-2 is transmitted to, via the interfaces P-3 and P-4, and stored in the data validity information table ET-1 and ET-2 of the shared memory devices M-1 and M-2, respectively.

Accordingly, the information of the on-line registers OR-1 and OR-2 of all the servers S-1 and S-2, respectively, is copied into the on-line information table OT-1 of the shared memory device M-1. Similarly, thee information of the on-line registers OR-1 and OR-2 of all the servers S-1 and S-2, respectively, is copied into the on-line information table OT-2 of the shared memory device M-2. Further, the information of the data validity flags EF-1 and EF-2 of the all the shared memory devices M-1 and M-2, respectively, is copied into the data validity information register ER-1 of server S-1. Similarly, the information of the data validity flags EF-1 and EF-2 of the all the shared memory devices M-1 and M-2, respectively, is copied into the data validity information register ER-2 of server S-2. Further, the information of the data validity information registers ER-1 and ER-2 of the all the shared memory devices M-1 and M-2, respectively, is copied into the data validity information table ET-1 of the shared memory device M-1. Otherwise, the information of the data validity information registers ER-1 and ER-2 of the all the shared memory devices M-1 and M-2, respectively, is copied into the data validity information table ET-2 of the shared memory device M-2.

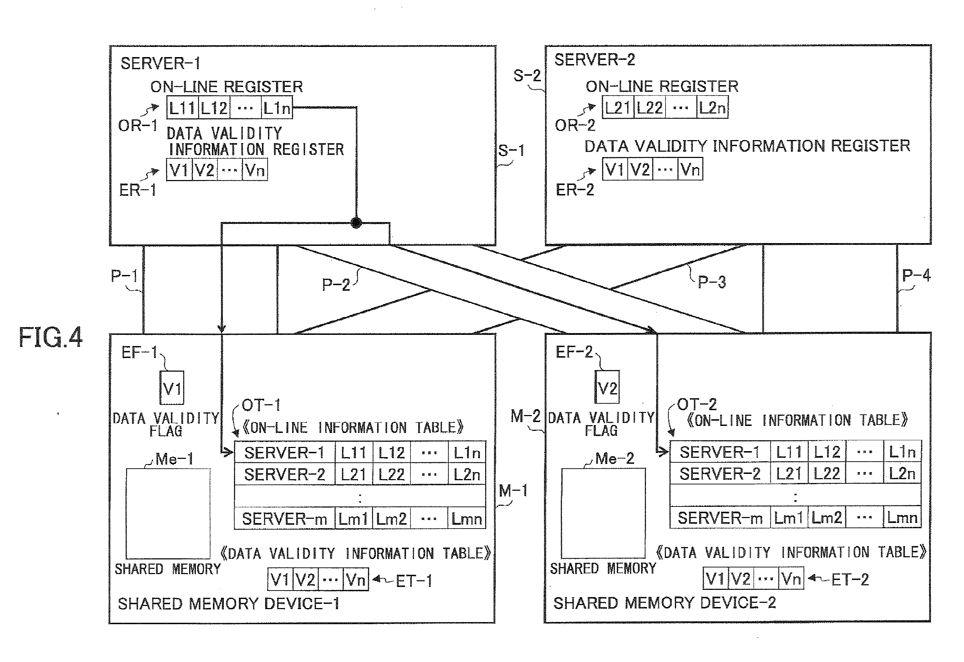

An example operation, which is to be performed by the information processing system described with reference to FIG. 3, is described with reference FIGS. 4 through 5B. In FIG. 4, for example, attention is paid to, for example, the server S-1. First, the hardware of the server S-1 monitors the on-line register OR-1 of the server S-1. Then, upon detecting a value change of any bit in the on-line register OR-1, the server S-1 transmits the information (value) of the on-line register OR-1 to each of the shared memory devices M-1 and M-2 via the interface P-1 and P-2, respectively. The shared memory devices M-1 and M-2 receive the information of the on-line register OR-1 from the server S-1, and store the received information into an entry (server 1) allocated to the server 1 in the on-line information tables OT-1 and OT-2, respectively.

By doing this, first, the information of the on-line register OR-1 of the server S-1 is transmitted to each of the shared memory devices M-1 and M-2.

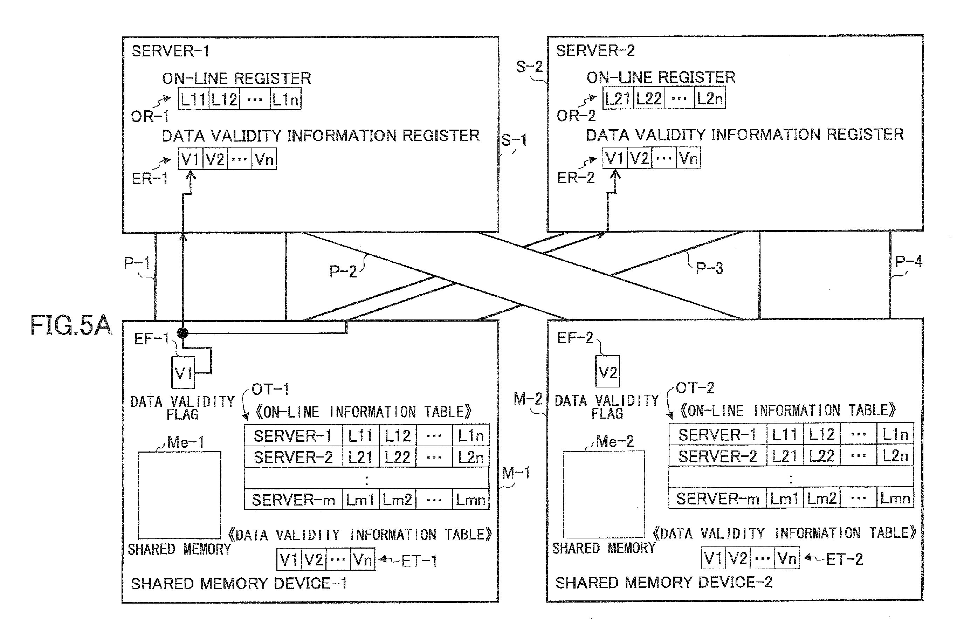

Next, in FIG. 5A, attention is paid to, for example, the shared memory device M-1. First, the hardware of the shared memory device M-1 monitors the data validity flag EF-1. Then, upon detecting the value change of the bit of the data validity flag EF-1, the shared memory device M-1 transmits the information (value) of the data validity flag EF-1 to each the servers S-1 and S-2 via the interface P-1 and P-3, respectively. The servers S-1 and S-2 receive the information of the data validity flag EF-1 from the shared memory device M-1, and store the information (value) into a bit (V1), which is allocated to the shared memory device M-1, in the data validity information registers ER-1 and ER-2, respectively.

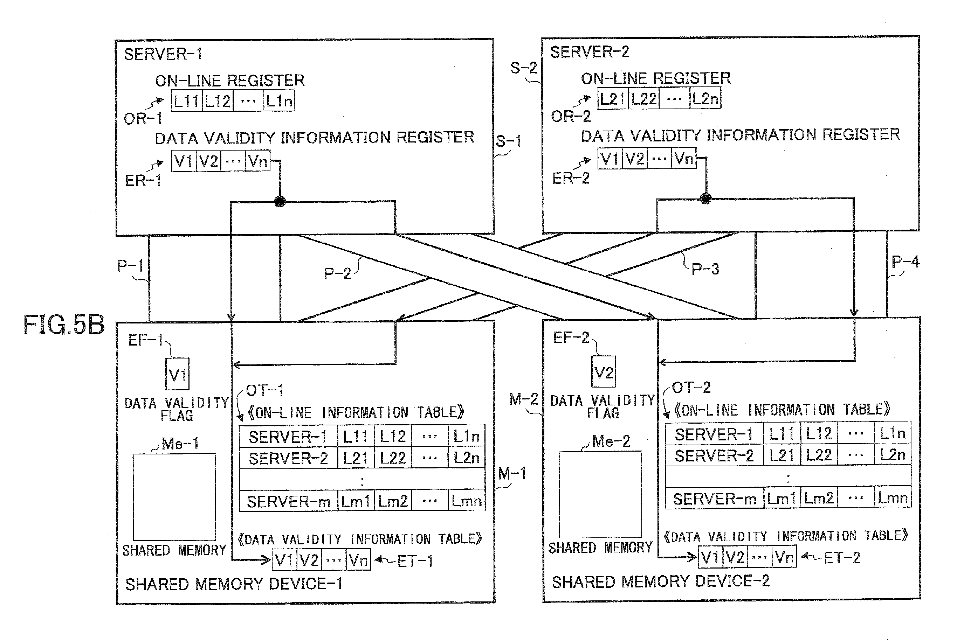

In FIG. 5B, for example, the hardware of the server S-1 monitors the data validity information register ER-1. As described with reference to FIG. 5A, the server S-1 receives the information of the data validity flag EF-1 from the shared memory device M-1, and stores the information (value) into the bit (V1), which is allocated to the shared memory device M-1, in the data validity information register ER-1. As a result, the hardware of the server S-1 detects the information change of the data validity information register ER-1, and transmits the information (value) of the data validity information register ER-1 to each of the shared memory devices M-1 and M-2 via the interfaces P-1 and P-2, respectively. The shared memory devices M-1 and M-2 receive the information of the data validity information register ER-1 from the server S-1, and stores the received information into the data validity information tables ET-1 and ET-2, respectively. Similarly, the
the hardware of the server S-2 detects the information change of the data validity information register ER-2, and transmits the information (value) of the data validity information register ER-2 to each of the shared memory devices M-1 and M-2 via the interfaces P-3 and P-4 respectively. The shared memory devices M-1 and M-2 receive the information of the data validity information register ER-2 from
the server S-2, and stores the received information into the data validity information tables ET-1 and ET-2, respectively.

By doing this, the information of the data validity flags EF-1 and EF-2 of all the shared memory devices M-1 and M-2 is transmitted to each of the shared memory devices M-1 and M-2.

As described with reference to FIGS. 3 through 5B, upon detecting the information change of the on-line registers OR-1 and OR-2 and data validity flags EF-1 and EF-2, the following operation is performed. Namely, the detected changed information of the on-line registers OR-1 and OR-2 and data validity flags EF-1 and EF-2 are transmitted to each of the servers S-1 and S-2 and shared memory devices M-1 and M-2 which are on-line. Then, finally, the on-line information tables OT-1 and OT-2 or the data validity information tables ET-1 and ET-2 in the shared memory devices M-1 and M-2, respectively, are updated. By doing this, the information desired to operate the multiplexing guarantee checking is aggregated into each of the shared memory devices M-1 and M-2. Here, it takes time for each of the shared memory devices M-1 and M-2 to transmit data between the servers and the shared memory devices. A predetermined delay time is waited after the information change is detected in the on-line information tables OT-1 and OT-2 or the data validity information tables ET-1 and ET-2. After the predetermined delay time has passed and when the data transmissions between the servers and the shared memory devices are completed, each of the shared memory devices M-1 and M-2 performs the multiplexing guarantee checking based on the information in the on-line information tables OT-1 and OT-2 and the data validity information tables ET-1 and ET-2.

In each of the servers S-1 and S-2, if the server becomes system off-line, the server clears and sets the information (value) of the data validity information register ER-1 or ER-2 thereof to "0". Further, in each of the shared memory devices M-1 and M-2 if the shared memory device becomes system off-line, the shared memory device clears and sets the information (value) of the on-line information table OT-1 or OT-2 thereof to "0".

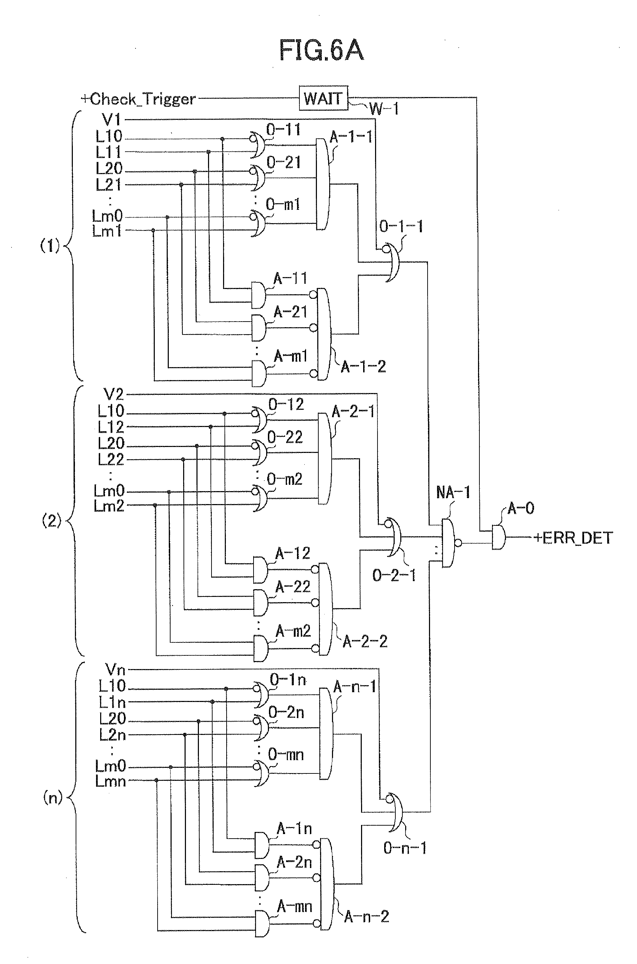

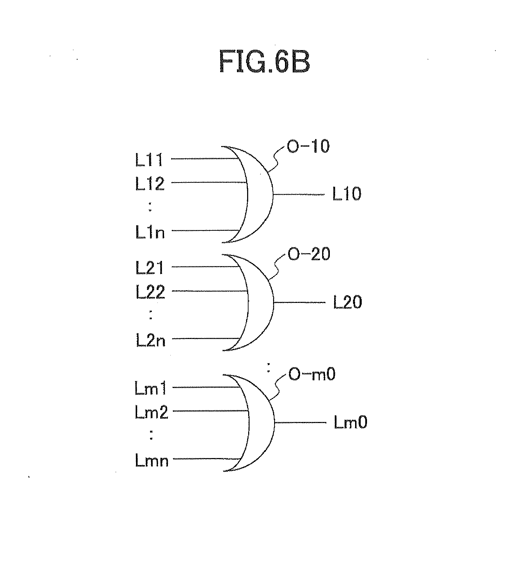

Next, with reference to FIGS. 6A and 6B, an example configuration of a multiplexing guarantee checking circuit 212 (see FIG. 15) is described that performs the multiplexing guarantee checking operation in each of the shared memory devices M-1 and M-2. As illustrated in FIG. 6A, the multiplexing guarantee checking circuit 212 includes a circuit part (1) to check the shared memory device M-1, a circuit part (2) to check the shared memory device M-2, ..., and a circuit part (n) to check the shared memory device M-n. Further, as illustrated in FIG. 6B, the multiplexing guarantee checking circuit 212 includes a circuit part to check (determine) whether each of the servers S-1 through S-m is system off-line.

The circuit part (1) of FIG. 6A includes an OR circuit O-11 which is a logic circuit to check the server S-1, an OR circuit O-21 to check the server S-2, ..., and an OR circuit O-m1 to check the server S-m. Further, the circuit part (1) includes an AND circuit A-11 to check the server S-1, an AND circuit A-21 to check the server S-2, ..., and an AND circuit A-m1 to check the server S-m. Further, the circuit part (1) includes an AND circuit A-1-1 that inputs the outputs of the OR circuits O-11 through O-m1 and an AND circuit A-1-2 that inputs the outputs of the AND circuits A-11 through A-m1. Further, the circuit part (1) includes an OR circuit O-1-1 that inputs the outputs of the AND circuits A-1-1 and A-1-2 and the value of the data validity flag of the shared memory device M-1.

Similarly, the circuit part (2) of FIG. 6A includes an OR circuit O-12 to check the server S-1, an OR circuit O-22 to check the server S-2, ..., and an OR circuit O-m2 to check the server S-m. Further, the circuit part (2) includes an AND circuit A-12 to check the server S-1, an AND circuit A-22 to check the server S-2, ..., and an AND circuit A-m2 to check the server S-m. Further, the circuit part (2) includes an AND circuit A-2-1 that inputs the outputs of the OR circuits O-12 through O-m2 and an AND circuit A-2-2 that inputs the outputs of the AND circuits A-12 through A-m2. Further, the circuit part (2) includes an OR circuit O-2-1 that inputs the outputs of the AND circuits A-2-1 and A-2-2 and the value of the data validity flag of the shared memory device M-2.

Similarly, the circuit part (n) of FIG. 6A includes an OR circuit O-1n to check the server S-1, an OR circuit O-2n to check the server S-2, ..., and an OR circuit O-mn to check the server S-m. Further, the circuit part (n) includes an AND circuit A-1n to check the server S-1, an AND circuit A-2n to check the server S-2, ..., and an AND circuit A-mn to check the server S-m. Further, the circuit part (n) includes an AND circuit A-n-1 that inputs the outputs of the OR circuits O-1n through O-mn and an AND circuit A-n-2 that inputs the outputs of the AND circuits A-1n through A-mn. Further, the circuit part (n) includes an OR circuit O-n-1 that inputs the outputs of the AND circuits A-n-1 and A-n-2 and the value of the data validity flag of the shared memory device M-n.

Further, the multiplexing guarantee checking circuit 212 includes a NAND circuit NA-1 that inputs the outputs the OR circuit O-1-1, the OR circuit O-2-1, ..., and the OR circuit O-n-1; and an AND circuit that inputs the output of a timer W-1 and the output of the NAND circuit NA-1. The timer W-1 applies a predetermined delay time to a check trigger that is output when content change is detected in the on-line information table or the data validity information table.

Further, as illustrated in FIG. 6B, the multiplexing guarantee checking circuit 212 includes an OR circuit O-10 to check whether the server S-1 is system off-line, an OR circuit O-20 to check whether the server S-2 is system off-line, ..., and an OR circuit O-m0 to check whether the server S-m is system off-line.

Next, the operation of the multiplexing guarantee checking circuit 212 having the above configuration is described. First, the OR circuit O-10 inputs the entry values L11, L12, ..., and L1n of the server S-1 from the on-line information table. If the server S-1 is system off-line, the shared memory devices M-1, M-2, ..., and M-n are off-line with the respect to the server S-1. Therefore, all the values L11, L12, ..., and L1n are set to zero. As a result, the output L10 of the OR circuit O-10 is "0". Similarly, if the server S-2 is system off-line, the output L20 of the OR circuit O-20 is "0";...; and if the server S-m is system off-line, the output Lm0 of the OR circuit O-mo is "0".

Next, the operation of the circuit part (1) of FIG. 6A is described. The OR circuit O-11 that checks the server S-1 inputs an inverted value of the L10 which becomes "0" when the server S-1 is system off-line and the value of the on-line information L11 related to the server S-1. Therefore, the OR circuit O-11 outputs "1" when the server S-1 is system off-line, outputs "1" when the server S-1 is not system off-line and the shared memory device M-1 is on-line with the server S-1, and outputs "0" when the server S-1 is not system off-line and the shared memory device M-1 is off-line with the server S-1. This also applied to the other OR circuits O-21, ..., and O-m1. Namely, when the corresponding server is system off-line, a value "1" is output; and when the corresponding server is not system off-line, if the shared memory device is on-line with the corresponding server, a value "1" is output, and if the shared memory device is off-line with the corresponding server, a value "0" is output. Then, the AND circuit A-1-1 outputs the value "1" only when all the output values from the OR circuits O-11, ..., and O-m1 are "1", and outputs the value "0" when any of the outputs from OR circuits O-21, ..., and O-m1 is "0". Here, the case where all the output values from the OR circuits O-11, ..., and O-m1 are "1" corresponds to a case where the shared memory device M-1 is on-line with all the servers except for a server which is system off-line. Namely, in this case, as the on-line state of the servers with respect to the shared memory device M-1, all the servers except a server which is system off-line are on-line. Accordingly, as the on-line state with respect to the shared memory device M-1, all the servers except for the server which is system off-line have the same on-line state with each other. Accordingly, the AND circuit A-1-1 outputs the value "1" only when as the on-line state with respect to the shared memory device M-1, all the servers except for a server which is system off-line have the same on-line state with each other.

Similarly, in the circuit part (1), the AND circuit A-11 checks that the server S-1 inputs the values of L10 and L11. The value of L10 is "0" when the server S-1 is system off-line. The L11 denotes the on-line information of the server S-1. Therefore, the AND circuit A-11 outputs "0" when the server S-1 is system off-line. When the server S-1 is system off-line, the AND circuit A-11 outputs "1" if the shared memory device M-1 is on-line with the server S-1, and the AND circuit A-11 outputs "0" if the shared memory device M-1 is off-line with the server S-1. This also applied to other AND circuits A-21 through A-m1. Namely, each of these AND circuits outputs "0" when the corresponding server is system off-line, and when the corresponding server is not system off-line, the AND circuit outputs "1" if the shared memory M-1 is on-line with the corresponding server, and outputs "0" if the shared memory M-1 is off-line with the corresponding server. Further, the AND circuit A-1-2 inverts all the input values. Therefore, AND circuit A-1-2 outputs "1" only when all the outputs of the AND circuits A-11 through A-m1 are "0", and outputs "0" when any one of the outputs of the AND circuits A-11 through A-m1 is "1". Here, the case where all the outputs of the AND circuits A-11 through A-m1 are "0" corresponds to a case where the shared memory device M-1 is on-line with all the servers except for a server which is system off-line. Namely, in this case, as the on-line state with respect to the shared memory device M-1, all the servers except for a server which is system off-line are off-line. Therefore, the AND circuit A-1-2 outputs "1" in the on-line (off-line) state with respect to the shared memory device M-1, all the servers except for a server which is system off-line have the same off-line state with each other. Therefore, the AND circuit A-1-2 outputs "1" only in the on-line state with respect to the shared memory device M-1, all the servers except for a server which is system off-line have the same off-line state with each other.

Further, the OR circuit O-1-1 outputs "1" when the data of the shared memory device M-1 is invalid (V1=0), when the output of the AND circuit A-1-1 is "1", or when the output of the AND circuit A-1-2 is "1". Namely, in a case where the data of the shared memory device M-1 is valid, the OR circuit O-1-1 outputs "1" only when all the servers except for a server which is system off-line have the same on-line state or off-line state with respect to the shared memory device M-1.

Similarly, the OR circuit O-2-1 outputs "1" when the data of the shared memory device M-2 is invalid (V2=0), when the output of the AND circuit A-2-1 is "1", or when the output of the AND circuit A-2-2 is "1". Namely, in a case where the data of the shared memory device M-2 is valid, the OR circuit O-2-1 outputs "1" only when all the servers except for a server which is system off-line have the same on-line state or off-line state with respect to the shared memory device M-2.

As a result, the NAND circuit NA-1, which is a negative AND circuit. Outputs "0" only when, as the on-line state of the servers with respect to the shared memory devices, all the servers except for a server which is system off-line have the same on-line state or the off-line state with each other. Therefore, after the predetermined delay time has passed since the update of the on-line information table or the data validity information table is detected, the operation described below is performed.

Namely, only when all the servers except for a server which is system off-line have the same on-line state or off-line state with respect to all the shared memory devices having valid data among the shared memory devices M-1 through M-n, the AND circuit A-0 outputs "0". Here, all the servers except for a server which is system off-line have the same on-line state or off-line state with respect to all the shared memory devices having valid data is the condition to fulfill the multiplexing guarantee checking. Namely, the shared memory devices to be used for the data multiplexing do not include a shared memory device having invalid data. Further, the shared memory devices to be used for the data multiplexing do not include a shared memory device which is off-line with all the servers which are system on-line. Therefore, as described above, all the servers except for a server which is system off-line have the same on-line state or off-line state with respect to all the shared memory devices having valid data is the condition to fulfill the multiplexing guarantee checking.

Therefore, the fact that the AND circuit A-0 outputs "1" means that the above multiplexing guarantee checking condition is not satisfied. In the first embodiment, when a signal having the value "1" as the output of the AND circuit A-0 is used as a trigger, a server or a shared memory device, which may be a cause of not satisfying the multiplexing guarantee checking condition, is set to off-line with the system. Namely, the shared memory device having the multiplexing guarantee checking circuit 21 outputting the signal transmits a command to each server, the command being to set the server or the shared memory device, which may be a cause of not satisfying the multiplexing guarantee checking condition, to off-line with the system. The servers that received the command perform an operation to set the corresponding server or the shared memory device to off-line with the system. As a result, the server or the shared memory device, which may be a cause of not satisfying the multiplexing guarantee checking condition, is set to off-line with (separated from) the system, so that the multiplexing guarantee checking condition is satisfied. Namely, the multiplexing guarantee restoration state may be achieved.

As described, in a system including plural servers and plural shared memory devices according to the first embodiment, the data validity information and the on-line information are transmitted among devices by using hardware. The data validity information and the on-line information are aggregated into each of the shared memory devices. In each of the shared memory devices, the multiplexing guarantee checking is performed by using hardware based on the aggregated information. When it is determined that multiplexing guarantee checking condition is not satisfied, a server or a shared memory device that may be a cause of not satisfying the multiplexing guarantee checking condition is determined, and the determined server or shared memory device is set to off-line by the hardware of a server. As a result, the multiplexing guarantee checking condition is satisfied. As described above, it may become possible to realize the multiplexing guarantee restoration state by rapidly separating the server or a shared memory device that may be a cause that the multiplexing guarantee checking condition is not satisfied.

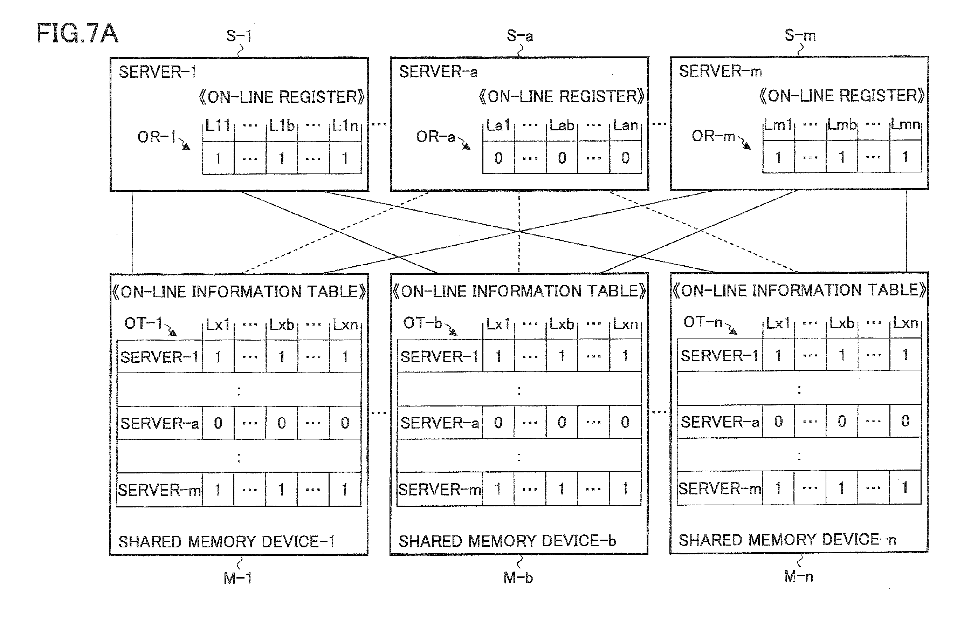

A specific sample operation of the information processing system according to the first embodiment is described with reference to FIGS. 7A through 11B.

First, with reference to FIGS. 7A through 7C, an example operation when the information (value) of the on-line register is changed is described. Here, it is assumed that the system includes m servers and n shared memory devices. In the following, the symbol "Lab" denotes the on-line information indicating the on-line state of the server S-a with respect to the shared memory device M-b. Further, the symbol "Lab" denotes the bit indicating the on-line state between the server S-a and the shared memory device M-b. Further, the Lab having a value "0" denotes off-line, and the Lab having a value "1" denotes on-line. Similarly, the symbol "Lxb" denotes the on-line information indicating the on-line state of the server S-x with respect to the shared memory device M-b, and that is, denotes the bit indicating the on-line state between the server S-x and the shared memory device M-b. Further, the Lxb having a value "0" denotes off-line, and the Lxb having a value "1" denotes on-line.

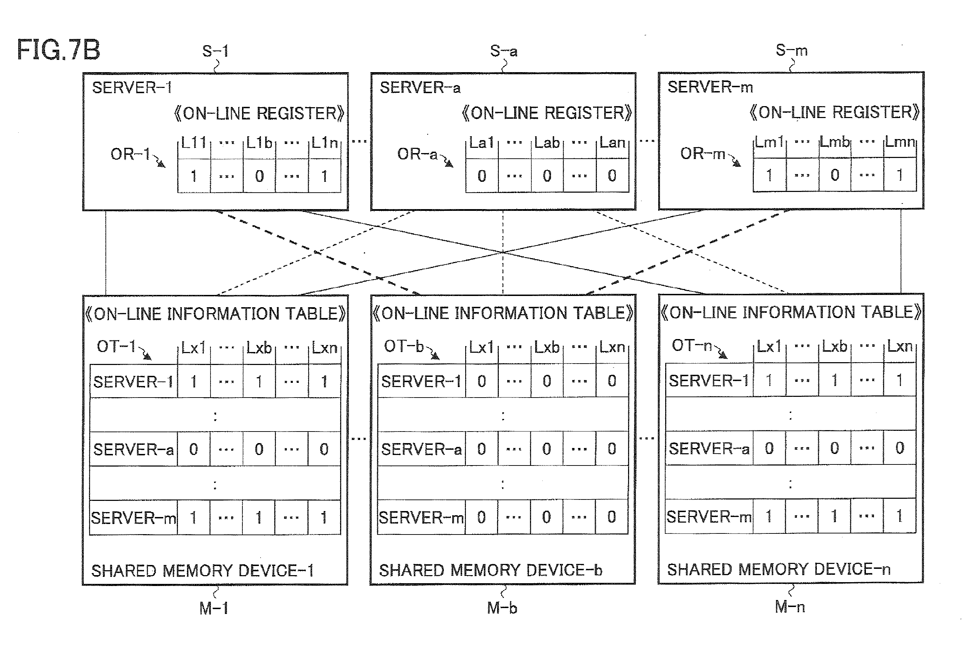

FIG. 7A illustrates an initial state where the server S-a is system off-line and all the servers except for the server S-a are on-line with all the shared memory devices. Next, the shared memory device M-b is set to system off-line. As a result, as illustrated in FIG. 7B, in the on-line registers OR-1, ..., and OR-m of all the servers except for the server S-a, the value of all the bits (L1, ..., and Lmb) corresponding to the server M-b is "0". Further, all the values in the on-line information table OT-b of the shared memory device M-1 are cleared to "0".

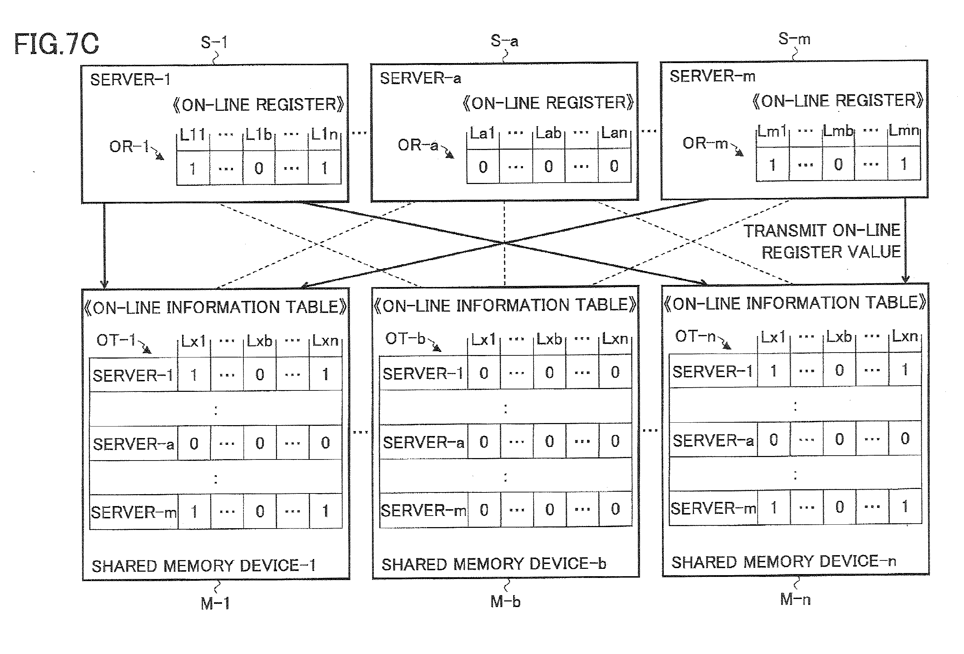

As a result, all the servers except for the server S-a detect the value change of the corresponding on-line registers. Further, as illustrated in FIG. 7C, all the servers S-1, ..., and S-m except for the server S-a transmit the values of the respective on-line registers OR-1, ..., and OR-m to all the shared memory devices which are on-line (i.e., the all the shared memory devices M-1, ..., and M-n except for the shared memory device M-b). The all the shared memory devices M-1, ..., and M-n, except for the shared memory device M-b, having received the values of the on-line registers, update the entries corresponding to the servers, which are the sources of the transmission, in the on-line information tables of the shared memory devices based on the values of the on-line registers. As a result, as illustrated in FIG. 7C, in the on-line information tables OT-1, ..., and OT-n of all the shared memory devices M-1, ..., and M-n except for the shared memory device M-b, as the entries corresponding to all the servers S-1, ..., and S-m except for the server S-a, the value of "Lxb" corresponding to the shared memory device M-b is changed from "1" to "0".

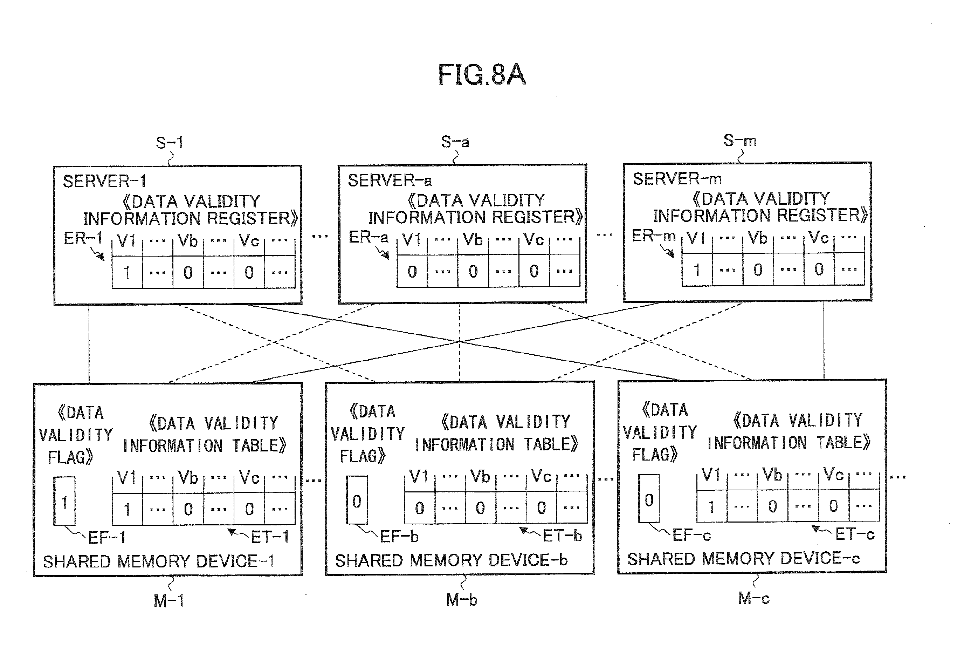

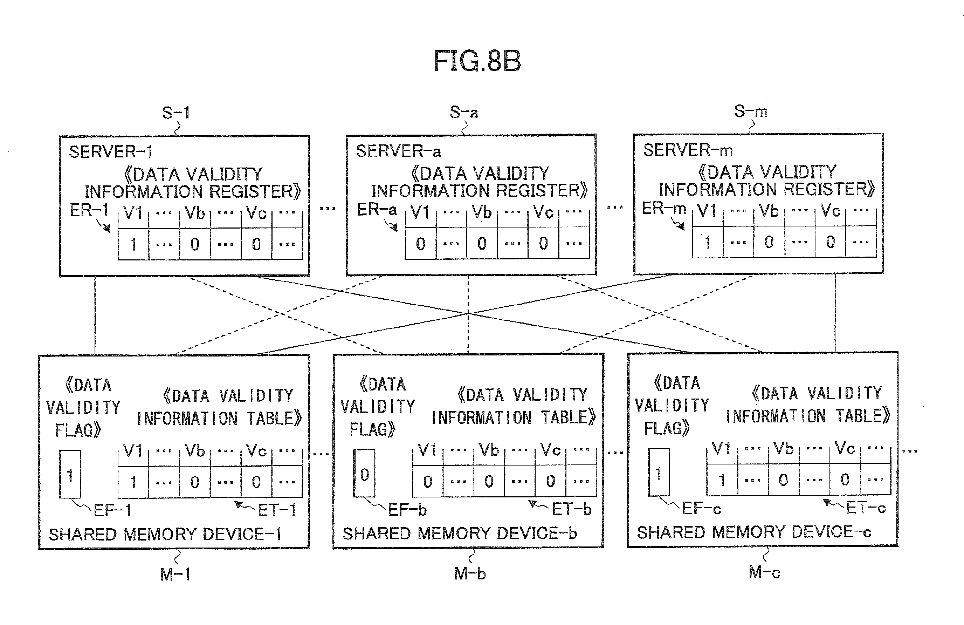

Next, with reference to FIGS. 8A through 8D, an example operation when the information change of the data validity flag is detected is described. Here, the symbol "Vb" denotes the value of the data validity flag EF-b of the shared memory device M-b. The value "0" denotes that the data is invalid. The value "1" denotes that the data is valid.

FIG. 8A illustrates an initial state where it is assumed that the server S-a and the shared memory device M-b are system off-line and all the servers S-1, ..., and S-m except for the server S-a and all the shared memory devices M-1, ..., and M-c are on-line. Further, it is assumed that the value of the data validity flag EF-1 of the shared memory device M-1 is "1", and the value of the data validity flag of all the other shared memory devices is "0". Further, the value of all the bits in the data validity information table ET-b of the shared memory device M-b, which is off-line, is cleared to "0".

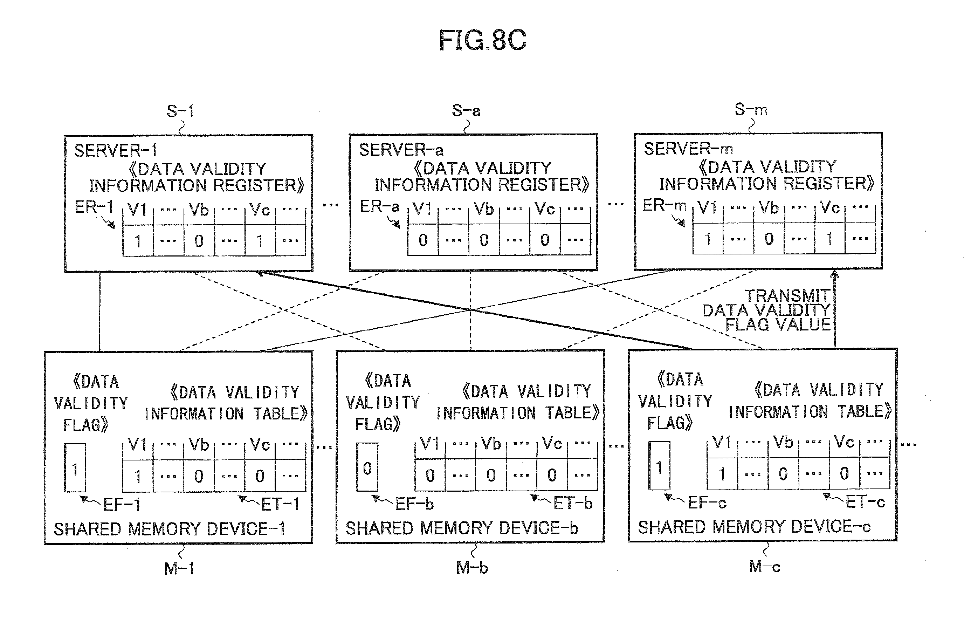

Next, as illustrated in FIG. 8A, it is assumed that the value of the data validity flag EF-c of the shared memory device M-c is changed from "0" to "1". The shared memory device M-c detects the value change of the data validity flag EF-c. Then, as illustrated in FIG. 8C, the shared memory device M-c transmits the value of the data validity flag EF-c thereof to all the servers which are on-line, that is all the servers except for the server S-a. Each of the servers having received the transmitted value, as illustrated in FIG. 8C, changes the bit (value) to "1" based on the transmitted value of the data validity flag, the bit corresponding to the transmission source shared memory device M-c in the data validity information register thereof.

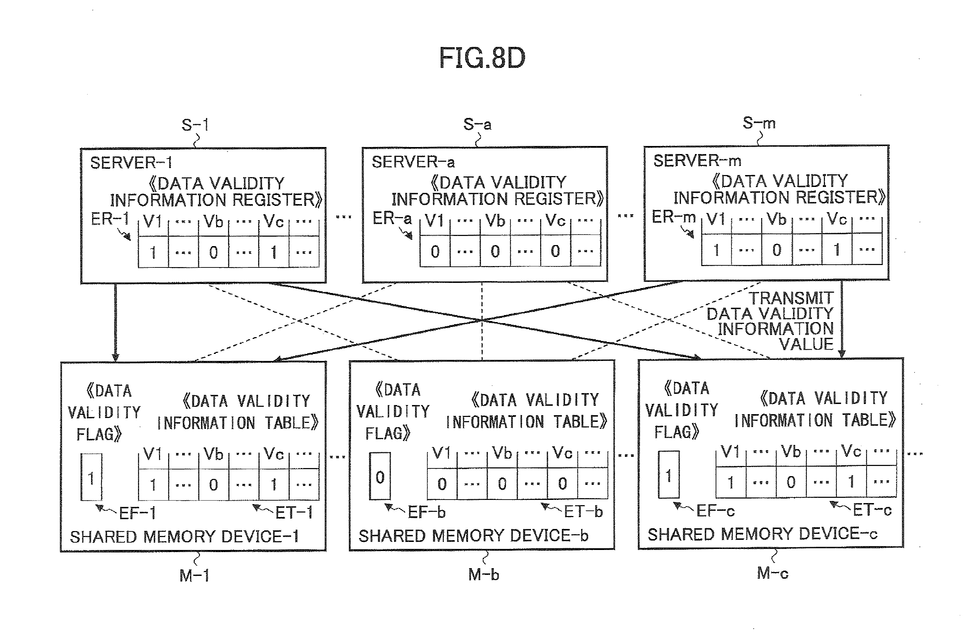

Then, all the servers S-1, ..., and S-m, except for the server A-a, that have updated the data validity information register thereof as described above detect the data change of the data validity information registers ER-1, ..., and ER-m, respectively, thereof. As a result, as illustrated in FIG. 8D, all the servers S-1, ..., and S-m, except for the server A-a transmit the respective value of the data validity registers ER-1, ..., and ER-m thereof to all the shared memory devices that are on-line, that is all the shared memory device except for the shared memory device M-b that is system off-line. Each of the shared memory devices that have received the value of the data validity information registers updates the bit (bit value), corresponding to the transmission-source servers, in the data validity information tables thereof based on the received value of the data validity information registers. Namely, as illustrated in FIG. 8D, the bit value, corresponding to the shared memory device M-c, in the data validity information tables ET-1, ..., and ET-c of all the shared memory devices M-1, ..., and M-c except for the shared memory device M-b is changed from "0" to "1".

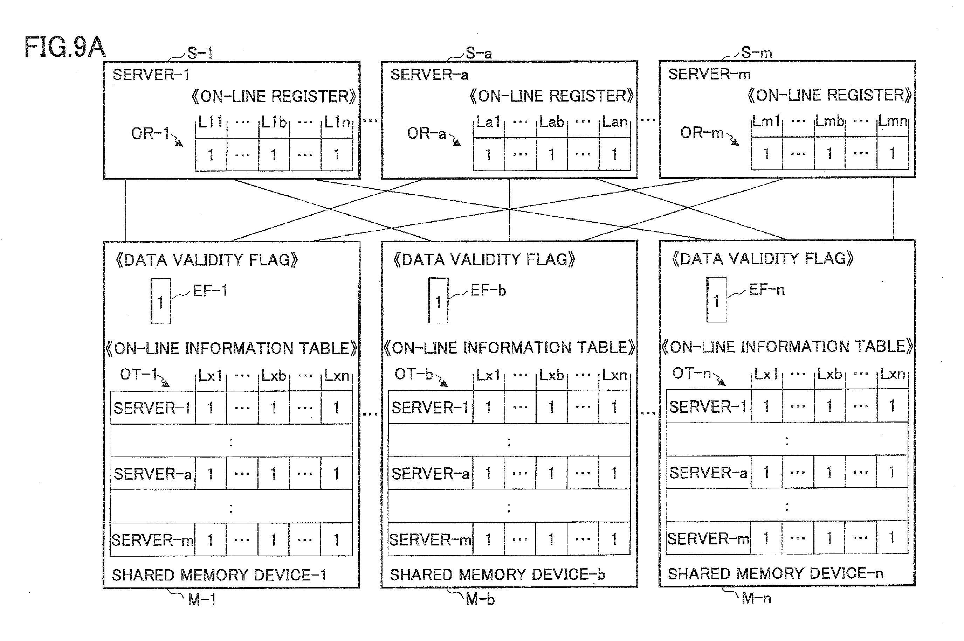

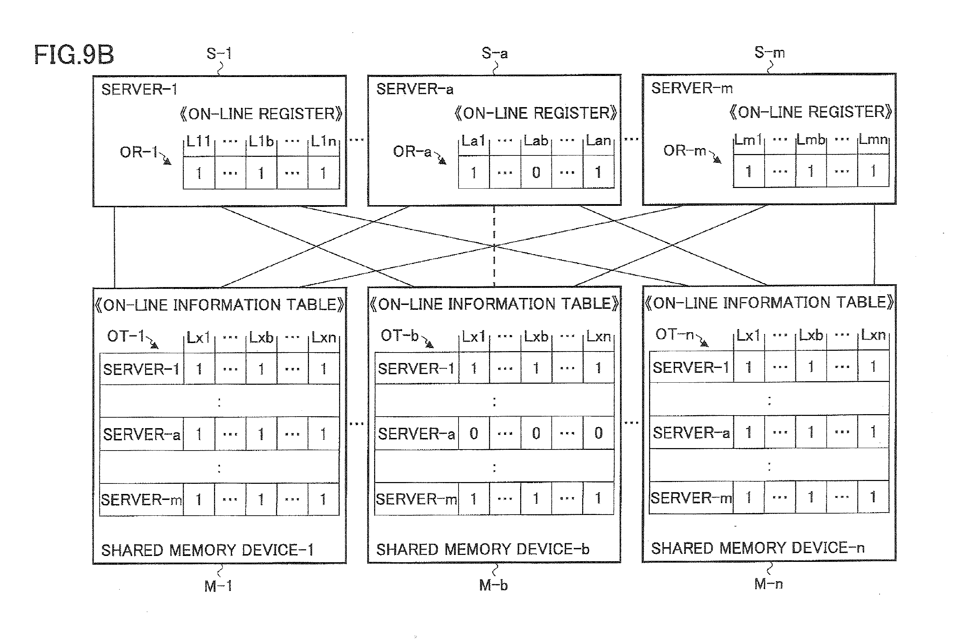

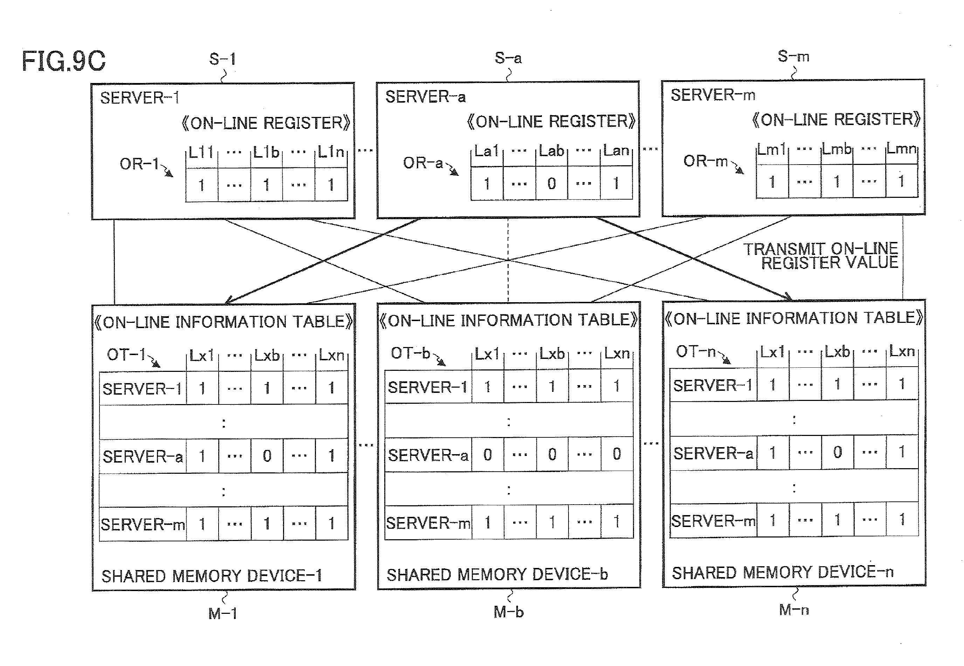

Next, with reference to FIGS. 9A through 9C, an example operation when the multiplexing guarantee checking condition is not satisfied is described. As illustrated in FIG. 9A, the information processing system includes m servers S-1, ..., and S-m and n shared memory devices M-1, ..., and M-n. In the initial condition of FIG. 9A, all the servers and all the shared memory devices are on-line, and the bit (value) of the data validity flag of all the shared memory devices is "1". Further,
in this example operation, after that it is assumed that the all the data validity flags and data validity information registers, and the data validity information tables are not changed. Further, descriptions of the data validity flags are omitted in FIGS. 9B and 9C.

Next, due to an unexpected cause, it is assumed that the communication line (interface) between the server S-a and the shared memory device M-b is in a cut (off-line) state due to a failure or the like. As a result, as illustrated in FIG. 9B, in the on-line register OR-a of the server S-a, the bit (value) corresponding to the shared memory device is "0". Also, in the on-line information table of the shared memory device M-b, all the bits (bit values) of the entry (server a) corresponding to the server S-a are cleared to "0".

As a result, the server S-a detects the data change in the on-line register OR-a, and as illustrated in FIG. 9C, transmits the values of the on-line register OR-a thereof to all the shared memory devices M-1, ..., and M-n except for the shared memory device M-b. As a result, in the on-line information tables OT-1, ..., and OT-n of all the shared memory devices M-1, ..., and M-n except for the shared memory device M-b, the entries corresponding to the transmission-source server S-a are updated based on the transmitted values of the on-line register OR-a. As a result, in the entries of the on-line information tables OT-1, ..., and OT-n of all the shared memory devices M-1, ..., and M-n except for the shared memory device M-b, the bit (value) of "Lxb" corresponding to the shared memory device M-b is changed from "1" to "0".

The multiplexing guarantee checking circuits 212 in all the shared memory devices M-1, ..., and M-n, except for the shared memory device M-b, that have received the transmitted values of the on-line register performs the multiplexing guarantee checking. In the on-line information tables OT-1, ..., and OT-n of all the shared memory devices M-1, ..., and M-n, except for the shared memory device M-b, the on-line states with respect to the shared memory devices are not matched to each other among all the servers S-1, ..., and S-m. Specifically, as illustrated in FIG. 9C, with respect to the shared memory device M-b (Lxb), only the server S-a is off-line ("0") but all the other servers S-1, ..., and S-m are on-line ("1"). Therefore, it is possible to determine that the cause of the inconsistency of the on-line state (i.e., the cause that the multiplexing guarantee checking condition is no satisfied) is the shared memory device M-b and the server S-a. Namely, by removing the value of "Lxb" corresponding to shared memory M-b and the values corresponding to the server S-a from the on-line information table OT-1, ..., and OT-n of all the shared memory devices M-1, ..., and M-n, except for the shared memory device M-b, the inconsistency may be overcome.

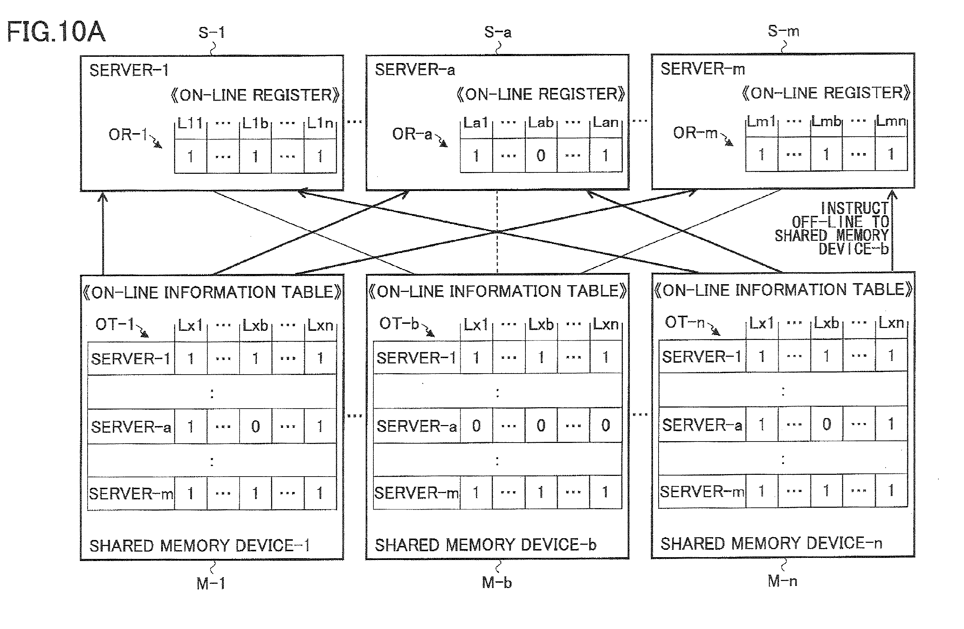

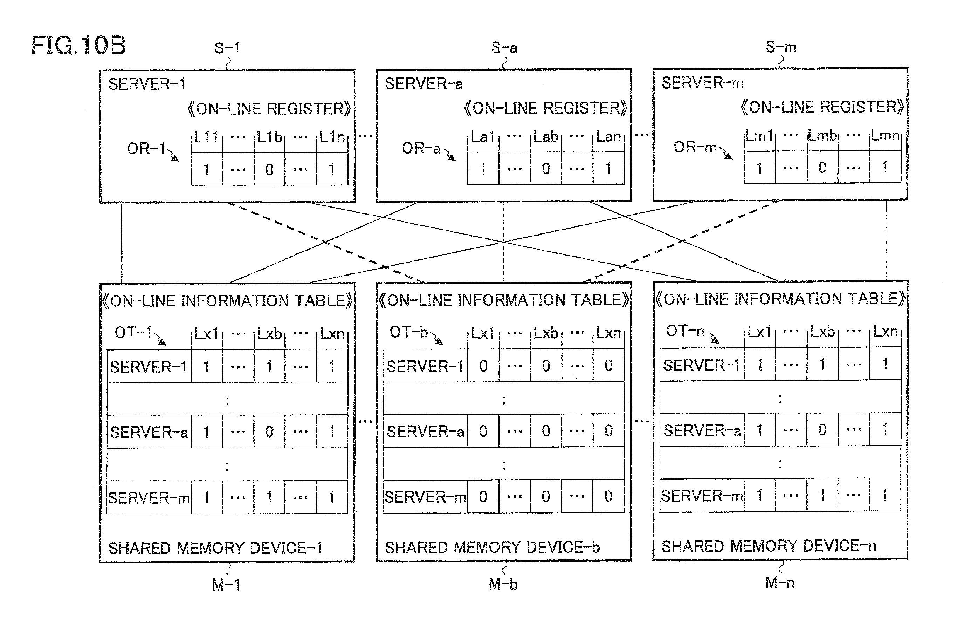

As described above, the multiplexing guarantee checking circuits 212 in all the shared memory devices M-1, ..., and M-n except for the shared memory device M-b detects that the multiplexing guarantee checking condition is not satisfied. As a result, for example, all the shared memory devices M-1, ..., and M-n except for the shared memory device M-b issue a command, to all the servers S-1, ..., and S-m, to set the shared memory device M-b which is the cause of the inconsistency to off-line (FIG. 10A).

Among all the servers S-1, ..., and S-m, all the servers except for the server S-a which is already off-line with the shared memory device M-b set the shared memory device M-b to off-line, and clear the bit values of bits L1b, ..., and Lmb corresponding to the shared memory device M-b in the on-line registers OR-1, ..., and OR-m thereof to "0".

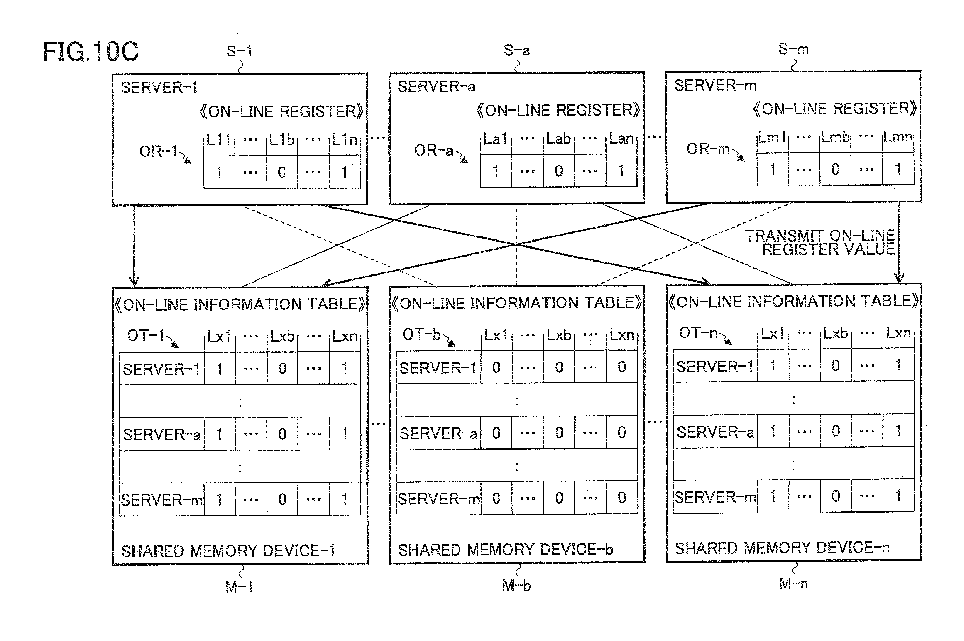

As a result, each of all the servers S-1, ..., and S-m except for the server S-a detects the change of the on-line registers OR-1, ..., and OR-m, and transmits the values of the on-line registers OR-1, ..., and OR-m to all the shared memory devices M-1, ..., and M-n (FIG. 10C). Upon receiving the transmitted values of the on-line registers OR-1, ..., and OR-m, the shared memory devices M-1, ..., and M-n except for the shared memory device M-b update the entry corresponding to the transmission sources in the on-line information tables OT-1, ..., and OT-n thereof based on the transmitted values of the on-line registers OR-1, ..., and OR-m. By doing this, all the shared memory devices M-1, ..., and M-n, except for the shared memory device M-b that have received the transmitted values of the on-line registers performs the multiplexing guarantee checking again.

In this case, as illustrated in FIG. 10C, in the on-line tables OT-1, ..., and OT-n of all the shared memory devices M-1, ..., and M-n, except for the shared memory device M-b, the bit values of bits Lxb corresponding to the shared memory device M-b are "0", which namely indicates that the shared memory device M-b is system off-line. In this case, when compared with the case of FIG. 9C, all the servers S-1, ..., and S-m including the server S-a are off-line ("0") with the shared memory device M-b and the on-line state with each of the shared memory devices is matched to each other among all the servers S-1, ..., and S-m. As a result, the multiplexing guarantee checking condition may be satisfied and the multiplexing guarantee restoration state may be achieved.

As described above, a method of restoring the multiplexing guarantee by separating the shared memory device M-b, which may be a cause that the multiplexing guarantee checking condition is not satisfied, from the system is described with reference to FIGS. 10A through 10C.

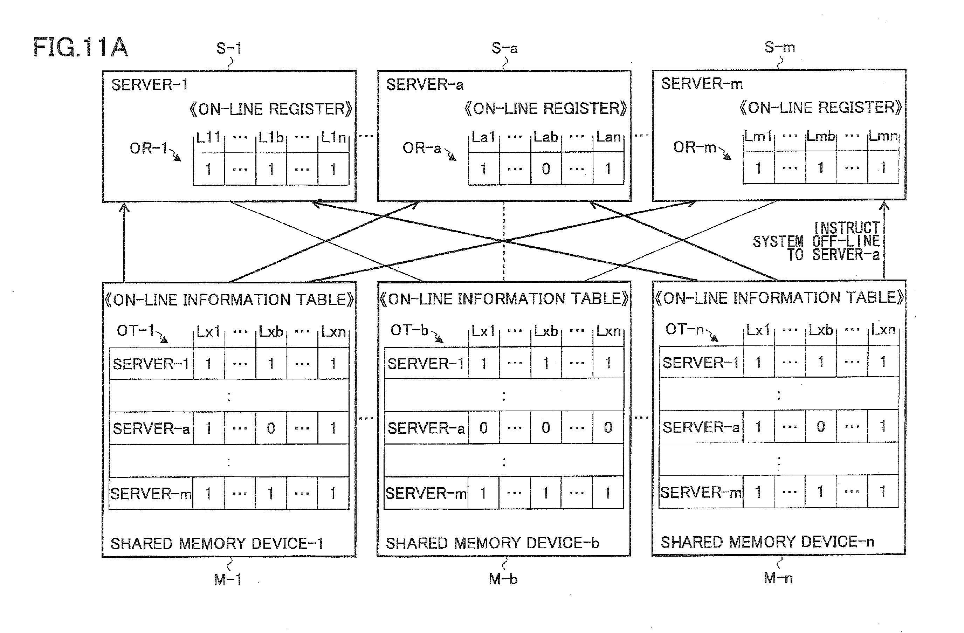

Next, with reference to FIGS. 11A through 11C, in a case where the multiplexing guarantee checking condition is not satisfied in the case of FIG. 9C, another method of restoring the multiplexing guarantee by separating the server S-a which is another cause that the multiplexing guarantee checking condition is not satisfied, other than the cause of the shared memory device M-b, from the system is described. Further, which of the server or the shared memory device is to be separated may be determined by, for example, an external setting.

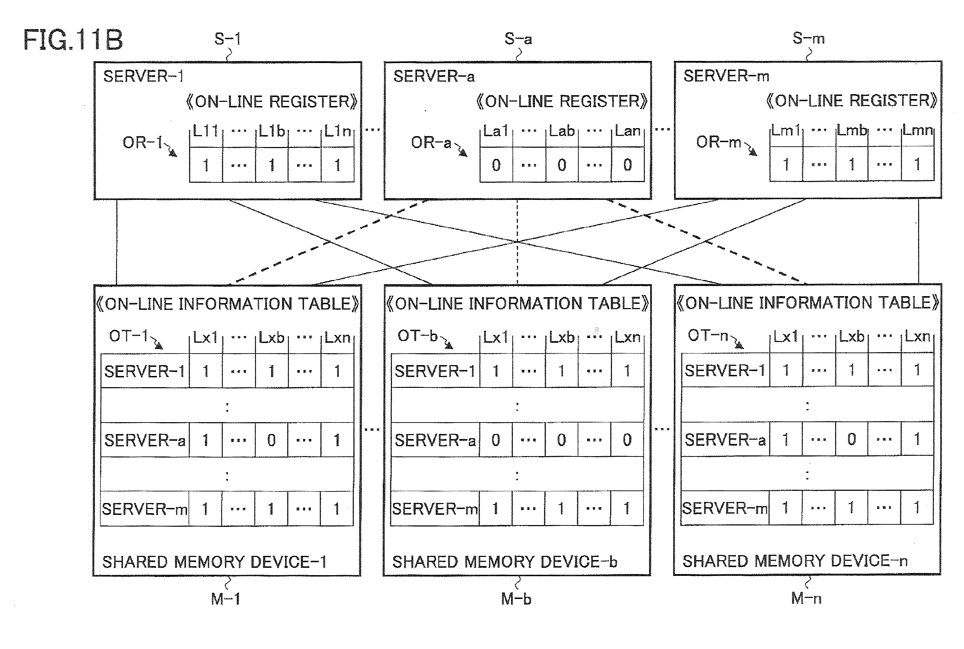

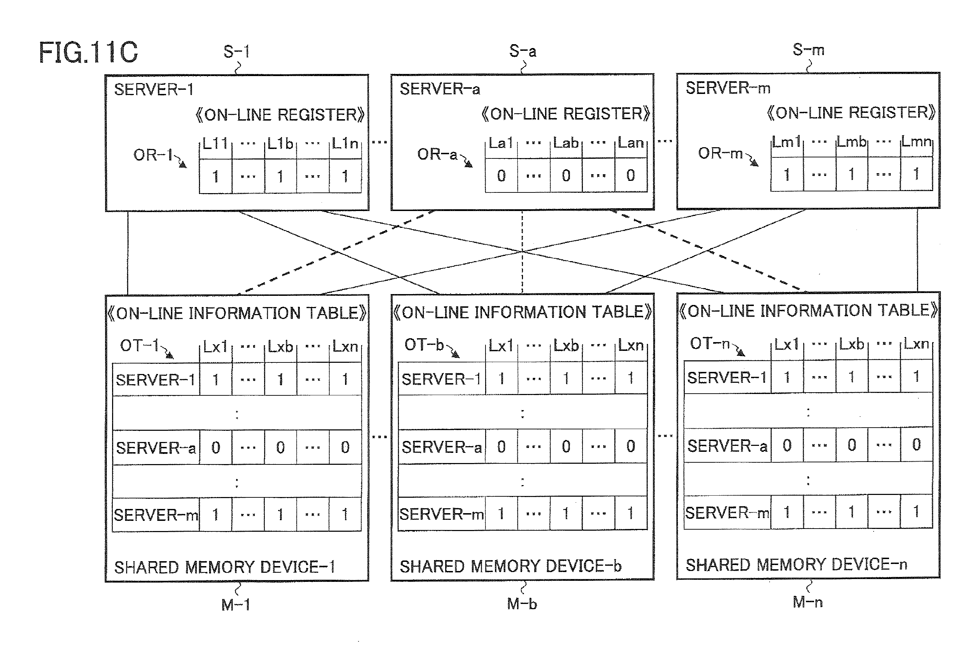

As described with reference to FIG. 9C, all the shared memory devices M-1, ..., and M-n, except for the shared memory device M-b, that have detected that the multiplexing guarantee checking condition is not satisfied perform the following operation. Namely, all the shared memory devices M-1, ..., and M-n except for the shared memory device M-b issue a command to instruct the off-line of the server S-a which is a cause of the inconsistency to each of all the servers S-1, ..., and S-m including the server S-a (FIG. 11A). Among the servers S-1, ..., and S-m, the server S-a sets off-line to all the shared memory devices M-1, ..., and M-n except for the shared memory device M-b which has already been set to off-line (FIG. 11B). As a result, all the bit (values) of the on-line register OR-a of the server S-a are cleared to "0". All the servers S-1, ..., and S-m except for the server S-a discard the command because those servers are not the target of the command. Here, all the shared memory devices M-1, ..., and M-n, except for the shared memory device M-b, that have been set to off-line detect the off-line state with the server S-a as described above, and update the on-line information tables OT-1, ..., and OT-n thereof (FIG. 11C). Specifically, all the bits of the entry related to the server S-a are cleared to "0".

Otherwise, each of all the shared memory devices M-1, ..., and M-n, except for the shared memory device M-b, that have detected to be off-line as described above, performs the multiplexing guarantee checking again. In this case, as illustrated in FIG. 11C, in the on-line information tables OT-1,..., and OT-n of the shared memory devices M-1, ..., and M-n except for the shared memory device M-b, when compared with the case of FIG. 9C, all the bit (values) of the entry corresponding to the server S-a are "0". This indicates that the server S-a is system off-line. Therefore, the on-line state with respect to each of the shared memory devices matches with each other among all the servers except for the server S-a which is system off-line. Therefore, the multiplexing guarantee checking condition may be satisfied and the multiplexing guarantee restoration state may be achieved.

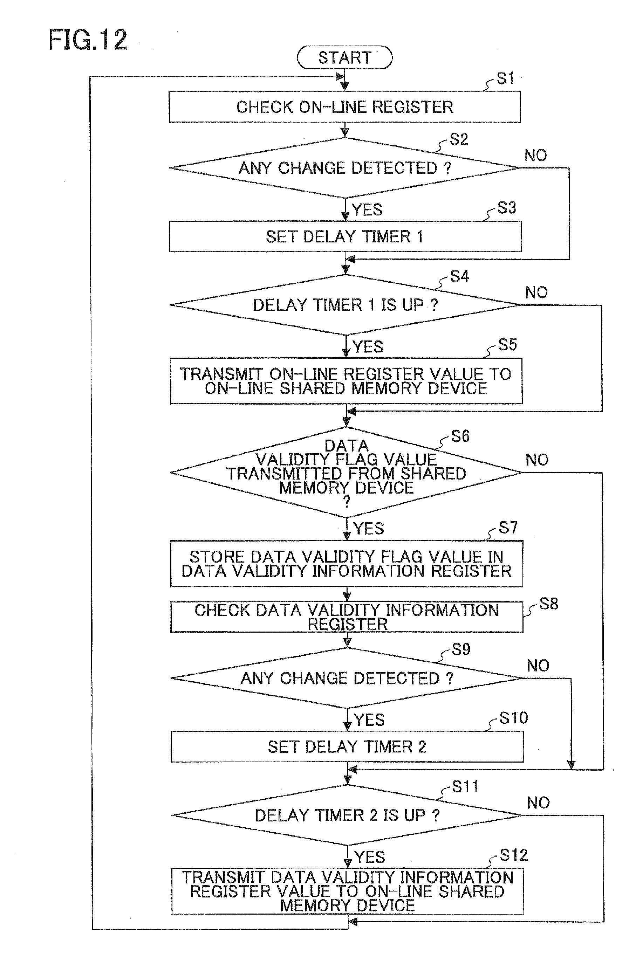

Next, with reference to FIG. 12, an example operation flow executed by each of the servers in the information processing system according to the first embodiment is described.

In steps S1 and S2, the server determines whether the value of the online register is changed. As a result of the determination, when determining no changes (NO in step S2), the process goes to step S4, and when determining that there is a change (YES in step S2), the process goes to step S3.

In step S3, a first predetermined delay time is set to a timer 1 and the timer starts, and then process goes to step S4. In step S4, the server determines whether the set first predetermined delay time has passed, so that the timer 1 is up. When it is determined that the first predetermined delay time has not passed and the timer 1 is not up, the process goes to step S6. When it is determined that the first predetermined delay time has passed and the timer 1 is up, the process goes to step S5. Here, after the set timer 1 is up and the timer up is once determined in step S4, the result of the determination in step S4 is NO until the timer 1 is set again.

In step S5, the server transmits the value of the on-line register thereof to the shared memory device which is on-line, and the process goes to step S6. In step S6, the server determines whether the value of the data validation flag is transmitted from the shared memory device. When it is determined that the value is not transmitted, the process goes to step S11, and when it is determined that the value is transmitted, the process goes to step S7. In step S7, based on the transmitted value of the data validity flag, the data validity register thereof is updated, and the process goes to step S8.

In steps S8 and S9, the server determines whether the value of the data validity information register thereof is changed. When it is determined that the value is not changed, the process goes to step S11. When it is determined that the value is changed, the process goes to step S10. In step S10, a second predetermined delay time is set to a timer 2 and the timer starts, and then the process goes to step S11. In step S11, the server determines whether the set second predetermined delay time has passed, so that the timer 2 is up. When it is determined that the second predetermined delay time has not passed and the timer 2 is not up, the process goes back to step S1. When it is determined that the second predetermined delay time has passed and the timer 2 is up, the process goes to step S12. Here, after the set timer 2 is up and the timer up is once determined in step S11, the result of the determination in step S11 is NO until the timer 2 is set again.

In step S12, the server transmits the value of the on-line register thereof to the shared memory device which is on-line, and then process goes back to step S1.

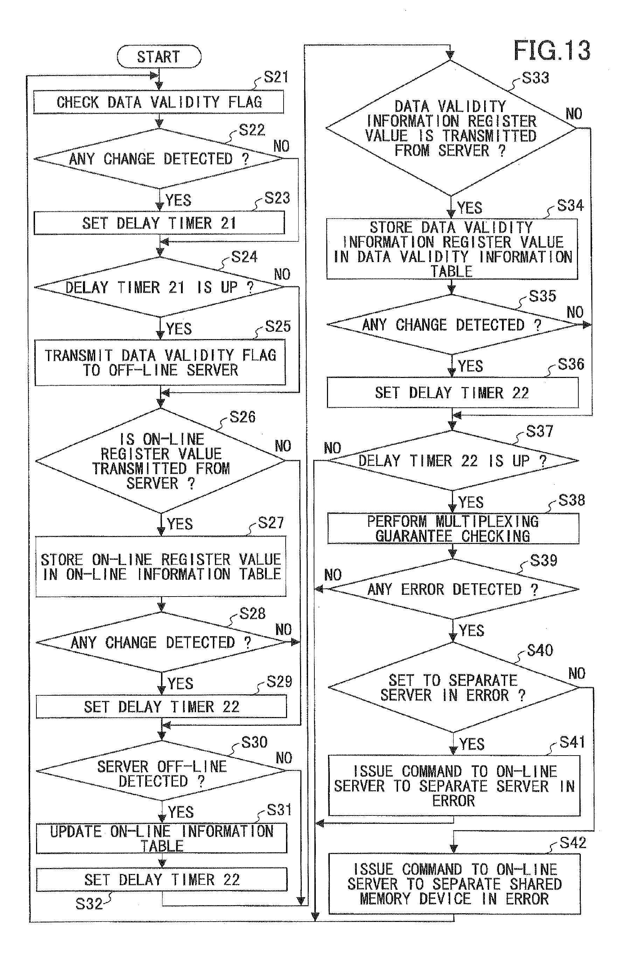

Next, with reference to FIG. 13, an example operation flow performed by each of the shared memory devices included in the information processing system according to the first embodiment is described.

In steps S21 and S22, the shared memory device determines whether the value of the data validation flag is changed. When determining no changes, the process goes to step S24, and when determining that there is a change, the process goes to step S23. In step S23, a first predetermined delay time is set to a timer 21 and the timer starts, and then process goes to step S24. In step S24, the shared memory device determines whether the set first predetermined delay time has passed, so that the timer 21 is up. When it is determined that the first predetermined delay time has not passed and the timer 21 is not up, the process goes to step S26. When it is determined that the first predetermined delay time has passed and the timer 21 is up, the process goes to step S25. Here, after the set timer 21 is up and the timer up is once determined in step S24, the result of the determination in step 24 is NO until the timer 21 is set again.

In step S25, the shared memory device transmits the value of the data validity flag thereof to the server which is on-line, and the process goes to step S26. In step S26, the shared memory device determines whether the value of the on-line register is transmitted from the server. When it is determined that the value is not transmitted, the process goes to step S30, and when it is determined that the value is transmitted, the process goes to step S27.

In step S27, based on the transmitted value of the on-line register, the on-line information table thereof is updated, and the process goes to step S28. In steps S28, the shared memory device determines whether the value of the on-line information table thereof is changed. When it is determined that the value is not changed, the process goes to step S30. When it is determined that the value is changed, the process goes to step S29. In step S29, a second predetermined delay time is set to a timer 22 and the timer starts, and then the process goes to step S30. The timer 22 corresponds to the timer W-1 illustrated in FIG. 6A.

In step S30, the shared memory device determines whether the off-line of the server that was on-line is detected. When it is determined that the off-line of the server is not detected, the process goes to step S33. When it is determined that the off-line of the server is detected, process goes to step S31. In step S31, in response to the detection of the off-line, the shared memory device updates the on-line information table thereof, and the process goes to step S32. In step S32, the timer 22 is set, and the process goes to step S33.

In step S33, the shared memory device determines whether the value of the data validity information register is transmitted. When it is determined that the value is not transmitted, the process goes to step S37. When it is determined that the value is transmitted, the process goes to step S34. In step S34, based on the transmitted value of the data validation information register, the shared memory device updates the data validity information table thereof, and the process goes to step S35. In step S35, the shared memory device determines whether the contents (a value) of the data validity information table are changed. When it is determined that the contents are not changed, the process goes to step S37. When it is determined that the contents are changed, the process goes to step S36.

In step S36, a second predetermined delay time is set to a timer 22 and the timer starts, and then process goes to step S37. In step S37, the shared memory device determines whether the set second predetermined delay time has passed, so that the timer 22 is up. When it is determined that the second predetermined delay time has not passed and the timer 22 is not up, the process goes back to step S21. When it is determined that the second predetermined delay time has passed and the timer 22 is up, the process goes to step S38. Here, after the set timer 22 is up and the timer up is once determined in step S37, the result of the determination in step S37 is NO until the timer 22 is set again.

In steps S38 and 39, the shared memory device performs the multiplexing guarantee checking. The multiplexing guarantee checking is performed by, for example, the multiplexing guarantee checking circuits 212 as illustrated in FIGS 6A and 6B. As a result of the multiplexing guarantee checking, when the multiplexing guarantee checking condition is satisfied (NO in step S39), the process goes back to step S21, and when the multiplexing guarantee checking condition is not satisfied, the process goes back to step S40. In step S40, when a device that may be a cause that the multiplexing guarantee checking condition is not satisfied is to be separated, the shared memory device determines whether a setting to separate the server is made in advance. When it is determined that the setting to separate the server is not made in advance, the process goes to step S42. When it is determined that the setting to separate the server is made in advance, the process goes to step S41. In step S41, the shared memory device issues a command to separate (set off-line to) the server that is the case that multiplexing guarantee checking condition is not satisfied to the servers which are on-line, and the process goes back to step S21. In step S42, the shared memory device issues a command to separate (set off-line to) the shared memory device that is the case that multiplexing guarantee checking condition is not satisfied to the servers which are on-line, and the process goes back to step S21.

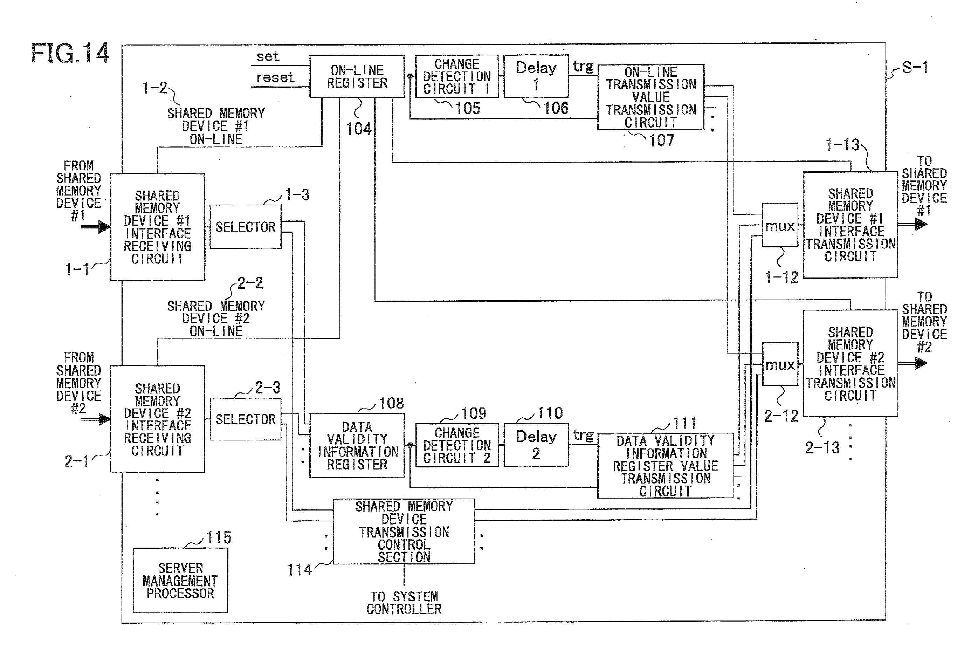

Next, with reference to FIG. 14, an example configuration of a functional block of the server S-1 included in the information processing system according to the first embodiment is described. Here, it is assumed that the configuration of other servers S-2, ..., included in the information processing system according to the first embodiment is the same as that of the server S-1.

The server 1 includes shared memory device interface receiving circuits 1-1, 2-1, ..., an on-line register 104, a change detection circuit 105, a timer 106, and an on-line register value transmission circuit 107. The shared memory device interface receiving circuits 1-1, 2-1, ..., receive the information transmitted from the shared memory devices which are on-line, and outputs on-line state signals 1-2, 2-2, ... to the on-line register 104, the on-line state signals 1-2, 2-2, ... indicating the on-line state with the respective shared memory devices. The on-line register 104 corresponds to the on-line registers OR-1, OR-2,... described above. The change detection circuit 105 detects the value change in the on-line register 104. The timer 106 corresponds to the timer 1 described above, and reduces the frequency of transmitting the value of the on-line register to the shared memory devices by delaying the timing when the value of the on-line register 104 is to be transmitted to the on-line register value transmission circuit 107 by the first predetermined delay time. When the change detection circuit 105 detects the value change in the on-line register 104, the on-line register value transmission circuit 107 transmits the value of the on-line register 104 to the shared memory devices. A multiplexer 1-12 of the server S-1 selects the information to be transmitted to the shared memory device.

The server S-1 further includes selectors 1-3, 2-3, ..., a data validity information register 108, a change detection circuit 109, a timer 110, a data validity information register value transmission circuit 111, and a shared memory device transmission control section 114. The server S-1 further includes multiplexers 1-12, 2-12, ..., and shared memory device interface transmission circuits 1-13, 2-13,.... The selectors 1-3, 2-3, ... distribute commands and information received from the shared memory devices to different destinations based on the types of the commands and information under the control of the shared memory device transmission control section 114. The data validity information register 108 corresponds to the data validity information registers ER-1, ER-2,.... The change detection circuit 109 detects the value change in the data validity information register 108. The timer 110 corresponds to the timer 2 described above, and reduces the frequency of transmitting the value of the data validity information register to the shared memory devices by delaying the timing when the value of the data validity information register 108 is to be transmitted to the data validity information register value transmission circuit 111 by the second predetermined delay time. When the change detection circuit 109 detects the value change in the data validity information register 108, the data validity information register value transmission circuit 111 transmits the value of the data validity information register 108 to the shared memory devices. Under the control of the shared memory device transmission control section 114, the multiplexers 1-12, 2-12, select the information to be transmitted to the respective shared memory devices. The shared memory device interface transmission circuits 1-13, 2-13,... transmit the information to the shared memory devices which are on-line based on the contents of the on-line register 104.

The server further includes a server management processor 115 that is a processor to manage the entire server.

Next, with reference to FIG. 15, an example configuration of a functional block of the shared memory device M-1 included in the information processing system according to the first embodiment is described. Here, it is assumed that the configuration of other shared memory devices M-2, ..., included in the information processing system according to the first embodiment is the same as that of the shared memory device M-1.

The shared memory device M-1 includes server interface receiving circuits 11-1, 12-1, ..., selectors 11-3, 12-3, ..., a data validation flag 204, a change detection circuit 205, a timer 206, and a data validity flag transmission circuit 207. The shared memory device M-1 further includes multiplexers 11-15, 12-15, ..., and server interface transmission circuits 11-16, 12-16, .... The server interface receiving circuits 11-1, 12-1, ..., receive the information transmitted from the respective servers, and transmit on-line state signals 11-2, 12-2, ... to an off-line detection circuit 218 and the server interface transmission circuits 11-16, 12-16, ..., the on-line state signals 11-2, 12-2, ... indicating the on-line states with the respective servers. The selectors 11-3, 12-3, ... distribute commands and information received from the servers to different destinations based on the types of the commands and information. The data validation flag 204 corresponds to the data validity flags EF-1, EF-2, .... The change detection circuit 205 detects the value change in the data validation flag 204. The timer 206 corresponds to the timer 21 described above, and reduces the frequency of transmitting the value of the data validation flag 204 to the servers by delaying the timing when the value of the data validation flag 204 is to be transmitted to the data validity flag transmission circuit 207 by the first predetermined delay time. When the change detection circuit 205 detects the value change in the data validation flag 204, the data validity flag transmission circuit 207 transmits the value of the data validation flag 204 to the servers. The multiplexers 11-15, 12-15, ... select the information to be transmitted to the respective servers. The server interface transmission circuits 11-16, 12-16, ... transmit the information to the server which are on-line based on the on-line state signals 11-2, 12-2, ... indicating the on-line states with the respective servers.

The shared memory device M-1 further includes an off-line detection circuit 218, an on-line information table 208, a data validity information table 209, a change detection circuit 210, a timer 211, the multiplexing guarantee checking circuit 212, a server/shared memory device separation command generation circuit 213, and a shared memory 214. The off-line detection circuit 218 detects that the server becomes on-line based on the on-line state signals 11-2, 12-2, ... indicating the on-line states with the respective servers, and updates the on-line information table 208 in accordance with the detection result. The on-line information table 208 corresponds to the on-line information tables OT-1, OT-2, .... The data validity information table 209 corresponds to the data validity information tables ET-1, ET-2, .... The change detection circuit 210 detects the contents change of the on-line information table 208 and the data validity information table 209. The timer 211 corresponds to the timer 22 to delay (wait), for example, the values of the on-line register and data validity information register transmitted from the servers with delay by the second predetermined delay time, so that the operation performed by the multiplexing guarantee checking circuit 212 may start after that.

The multiplexing guarantee checking circuit 212 has the circuit configuration as illustrated in FIGS. 6A and 6B, and determines whether the multiplexing guarantee checking condition is satisfied based on the contents of the on-line information table 208 and the data validity information table 209. Further, the multiplexing guarantee checking circuit 212 starts the multiplexing guarantee checking operation after the predetermined delay time set by the timer 211 has passed since the change in the on-line information table 208 or the data validity information table 209 is detected by the change detection circuit 210. The server/shared memory device separation command generation circuit 213 (device separation instruction transmitter) issues a command to separate the server or the shared memory device that is a cause that the multiplexing guarantee checking condition is not satisfied in response to an external setting when the multiplexing guarantee checking circuit 212 determines that the multiplexing guarantee checking condition is not satisfied. Then, the server/shared memory device separation command generation circuit 213 transmits the generated command to the servers. The shared memory 214 corresponds to the shared memories Me-1, Me-2, ....

Further, the shared memory device M-1 includes a shared memory device management processor 217. The shared memory device management processor 217 controls the entire shared memory device.

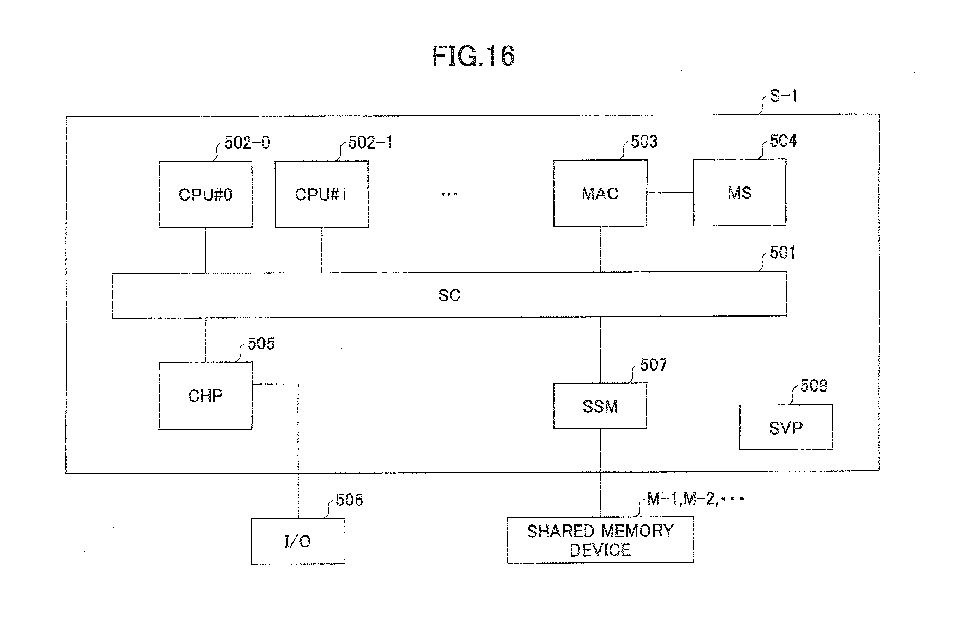

With reference to FIG. 16, an example entire configuration of the server S-1 included in the information processing system according to the first embodiment is described. Here, it is assumed that the other servers S-2, ... included in the information processing system according to the first embodiment has the similar configuration as that of the server S-1.

The server S-1 includes a system controller 501, plural Central Processing Units (CPUs) 502-0, 502-1, ... , a main memory controller 503, a main memory 504, a channel processing device 505, a shared memory device controller 507, and a server management processor 508. The system controller 501 performs access control to control the accesses from the CPUs 502-0, 502-1, ... , the channel processing device 505, the shared memory device controller 507 to the main memory controller 503. The CPUs 502-0, 502-1, ... execute the instructions read from the main memory 504. The channel processing device 505 controls the data transmissions between an input/output device 506 and the main memory 504. The input/output device 506 may include, for example, a display, a printer, a keyboard, a mouse and the like.

The shared memory device controller 507 transmits a command and data between the main memory 504 and the shared memory devices. Further, for example, the shared memory device controller 507 performs all the functions of the functional blocks of FIG. 14 excluding the functions of functions blocks of the server management processor 115. The server management processor 508 corresponds to the server management processor 115.

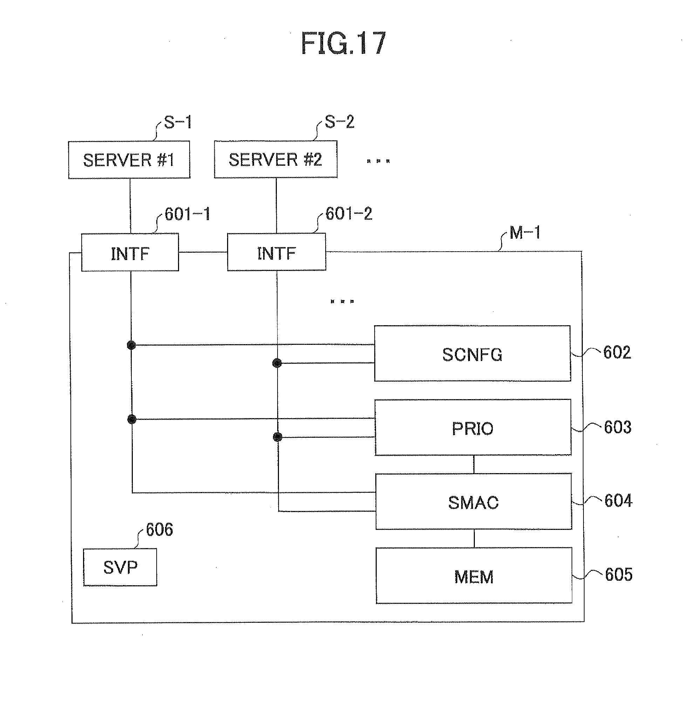

With reference to FIG. 17, an example entire configuration of the shared memory device M-1 included in the information processing system according to the first embodiment is described. Here, it is assumed that the other shared memory devices M-2, ... included in the information processing system according to the first embodiment has the similar configuration as that of the shared memory device M-1.

The shared memory device M-1 includes input/output controllers 601-1, 601-2, ... , a configuration controller 602, an access initiator 603, a memory access controller 604, a shared memory 605, and a shared memory device management processor 606. The input/output controllers 601-1, 601-2, ... control input/output of the information with the respective servers. Further, the input/output controllers 601-1, 601-2, ... correspond to the server interface receiving circuits 11-1, 12-1, ..., the selectors 11-3, 12-3, ..., the multiplexers 11-15, 12-15, ..., and the server interface transmission circuits 11-16, 12-16, .... The configuration controller 602 performs on-line control on the shared memory devices and the servers. Further, the configuration controller 602 performs all the functions of the function blocks of FIG. 15 excluding the functions of the functions blocks of the server interface receiving circuits 11-1, 12-1, ..., selectors 11-3, 12-3, ..., multiplexers 11-15, 12-15, ..., the server interface transmission circuits 11-16, 12-16, ... , the shared memory device management processor 217, and the shared memory 21.

The access initiator 603 controls the execution order of the commands from plural servers. The memory access controller 604 controls the write (store) and read (fetch) data to and from the shared memory 605. The shared memory 605 corresponds to the shared memory 214 of FIG. 15. The shared memory device management processor 606 corresponds to the shared memory device management processor 217 of FIG. 15.

### DESCRIPTION OF THE REFERENCE NUMERALS

S-1,S-2,S-a,S-m: SERVER (INFORMATION PROCESSING APPARATUS)
M-1,M-2,M-b,M-c,M-n: SHARED MEMORY DEVICE (SHARED MEMORY DEVICE)
Me-1,Me-2,Me-b,Me-n: SHARED MEMORY
OR-1,OR-2,OR-a,OR-m: ON-LINE REGISTER
ER-1,ER-2,ER-a,ER-m: DATA VALIDITY INFORMATION REGISTER
EF-1,EF-2,EF-b,EF-c,EF-n: DATA VALIDITY FLAG
OT-1,OT-2,OT-b,OT-n: ON-LINE INFORMATION TABLE (ENTIRE ON-LINE INFORMATION STORAGE)
ET-1,ET-2,ET-b,ET-c: DATA VALIDITY INFORMATION TABLE (ENTIRE DATA VALIDITY MAIN STORAGE)
107: ON-LINE REGISTER VALUE TRANSMISSION CIRCUIT (ON-LINE INFORMATION TRANSMITTER)
111: DATA VALIDITY INFORMATION REGISTER VALUE TRANSMISSION CIRCUIT (DATA VALIDITY INFORMATION TRANSMITTER)
207: DATA VALIDITY FLAG TRANSMISSION CIRCUIT (SPECIFIC DATA VALIDITY INFORMATION TRANSMITTER)
212: MULTIPLEXING GUARANTEE CHECKING CIRCUIT (MULTIPLEXING GUARANTEE CHECKING UNIT)
213: SERVER/SHARED MEMORY DEVICE SEPARATION COMMAND GENERATION CIRCUIT 213 (DEVICE SEPARATION INSTRUCTION TRANSMITTER)

## Claims

1. An information processing system comprising:
a first shared memory device including
a specific data validity information transmitter configured to transmit specific data validity information indicating validity of data stored in the first shared memory device;
an entire data validity information storage configured to store entire data validity information;
an entire on-line information storage configured to store first specific on-line information and second specific on-line information; and
a multiplexing guarantee checking unit configured to determine whether multiplexing of data stored among plural shared memory devices is guaranteed based on the information stored in the entire data validity information storage and the entire on-line information storage;
a second shared memory device including
a specific data validity information transmitter configured to transmit specific data validity information indicating validity of data stored in the second shared memory device;
an entire data validity information storage configured to store entire data validity information;
an entire on-line information storage configured to store first specific on-line information and second specific on-line information; and
a multiplexing guarantee checking unit configured to determine whether multiplexing of data stored among plural shared memory devices is guaranteed based on the information stored in the entire data validity information storage and the entire on-line information storage;
a first information processing apparatus including
an entire data validity information transmitter configured to transmit the entire data validity information including the specific data validity information transmitted by the first shared memory device and the specific data validity information transmitted by the second shared memory device to the first and second shared memory devices; and
an on-line information transmitter configured to transmit the first specific on-line information, indicating whether the first information processing apparatus is on-line with the first shared memory device and the second shared memory device, to the first and second memory devices; and
a second information processing apparatus including
an entire data validity information transmitter configured to transmit the entire data validity information including the specific data validity information transmitted by the first shared memory device and the specific data validity information transmitted by the second shared memory device to the first and second shared memory devices; and
an on-line information transmitter configured to transmit the second specific on-line information, indicating whether the second information processing apparatus is on-line with the first shared memory device and the second shared memory device, to the first and second shared memory devices.

2. The information processing system according to claim 1,
wherein the multiplexing guarantee checking unit is configured to
determine a valid shared memory device, in which stored data are valid, based on the specific data validity information of the first shared memory device and the specific data validity information of the second shared memory device included in the entire data validity information stored in the entire data validity information storage,
determine an off-line information processing apparatus that is off-line with all of the first and second shared memory devices based on the first specific on-line information and the second specific on-line information included in entire on-line information stored in the entire on-line information storage, and
determine whether all the information processing apparatuses excluding the determined off-line information processing apparatus have a same on-line or off-line connection state with the first and second shared memory devices based on the first specific on-line information and the second specific on-line information, and
wherein each of the first and second shared memory devices further comprises:
a device separation instruction transmitter configured to, when it is determined that all the information processing apparatuses excluding the determined off-line information processing apparatus do not have the same on-line or off-line connection state, transmit instructions to set at least one of the first and second information processing apparatuses and the first and second shared memory devices to off-line, to the first and second information processing apparatuses so that all the information processing apparatuses excluding the determined off-line information processing apparatus have the same on-line or off-line connection state with the first and second shared memory devices.

3. The information processing system according to claim 1,
wherein the specific data validity information transmitter of each of the first and second shared memory devices is configured to, when a change of the specific data validity information is detected, transmit the changed specific data validity information to the first and second information processing apparatuses,
wherein the entire data validity information storage of each of the first and second shared memory devices is configured to, when the entire data validity information is transmitted from the first or second information processing apparatus, store the transmitted entire data validity information,
wherein the entire on-line information storage of each of the first and second shared memory devices is configured to, when the first specific on-line information is transmitted from the first information processing apparatus, store the transmitted first specific on-line information, and is configured to, when the second specific on-line information is transmitted from the second information processing apparatus, store the transmitted second specific on-line information, and
wherein the multiplexing guarantee checking unit of each of the first and second shared memory devices is configured to determine whether multiplexing of data stored among plural shared memory devices is guaranteed when the entire data validity information is transmitted, when the first or second specific on-line information is transmitted, or when off-line of the first or second information processing apparatus is detected.

4. A shared memory device comprising:
a specific data validity information transmitter configured to transmit specific data validity information, which indicates validity of data stored in the shared memory device to first and second information processing apparatuses;
an entire data validity information storage configured to store entire data validity information including first and second specific data validity information, the first specific data validity information having been transmitted from the specific data validity information transmitter to the first and second information processing apparatuses once and having been transmitted from the first and second information processing apparatuses, the second specific data validity information having been transmitted from a specific data validity information transmitter of another shared memory device to the first and second information processing apparatuses once and having been transmitted from the first and second information processing apparatuses;
an entire on-line information storage configured to store first and second specific on-line information, the first specific on-line information indicating whether the first information processing apparatus is on-line with the shared memory device and the another shared memory device, the second specific on-line information indicating whether the second information processing apparatus is on-line with the shared memory device and the another shared memory device; and
a multiplexing guarantee checking unit configured to determine whether multiplexing of data that are stored among the shared memory device and the another shared memory device is guaranteed based on the information stored in the entire data validity information storage and the entire on-line information storage.

5. The shared memory device according to claim 4,
wherein the multiplexing guarantee checking unit is configured to
determine a valid shared memory device, in which stored data are valid, based on the specific data validity information of the shared memory device and the specific data validity information of the another shared memory device included in the entire data validity information stored in the entire data validity information storage,
determine an off-line information processing apparatus that is off-line with all of the shared memory device and the another shared memory device based on the first specific on-line information and the second specific on-line information included in entire on-line information stored in the entire on-line information storage, and
determine whether all the information processing apparatuses excluding the determined off-line information processing apparatus have a same on-line or off-line connection state with the shared memory device and the another shared memory device based on the first specific on-line information and the second specific on-line information, and
wherein each of the shared memory device and the another shared memory device further comprises:
a device separation instruction transmitter configured to, when it is determined that all the information processing apparatuses excluding the determined off-line information processing apparatus do not have the same on-line or off-line connection state, transmit instructions to set at least one of the first and second information processing apparatuses and the shared memory device and the another shared memory device to off-line, to the first and second information processing apparatuses so that all the information processing apparatuses excluding the determined off-line information processing apparatus have the same on-line or off-line connection state with the shared memory device and the another shared memory device.

6. The shared memory device according to claim 4,
wherein the specific data validity information transmitter is configured to, when a change of the specific data validity information is detected, transmit the changed specific data validity information to each of the first and second information processing apparatuses,
wherein the entire data validity information storage is configured to, when the entire data validity information is transmitted from the first or second information processing apparatus, to store the transmitted entire data validity information,
wherein the entire on-line information storage is configured to, when the first specific on-line information is transmitted from the first information processing apparatus, store the transmitted first specific on-line information, and is configured to, when the second specific on-line information is transmitted from the second information processing apparatus, store the transmitted second specific on-line information, and
wherein the multiplexing guarantee checking unit is configured to determine whether multiplexing of data stored among the shared memory device and the another shared memory device is guaranteed when the entire data validity information is transmitted, when the first or second specific on-line information is transmitted, or when off-line of the first or second information processing apparatus is detected.

7. An information processing apparatus comprising:
an entire data validity information transmitter configured to transmit entire data validity information including first and second specific data validity information to first and second shared memory devices, the first specific data validity information indicating validity of data of the first shared memory device and having been transmitted from the first shared memory device, the second specific data validity information indicating validity of data of the first shared memory device and having been transmitted from the second shared memory device; and
an on-line information transmitter configured to transmit specific on-line information, indicating whether the information processing apparatus is on-line with the first shared memory device and the second shared memory device, to the first and second memory devices.

8. A method of controlling an information processing system, the method comprising:
transmitting, by a specific data validity information transmitter of a first shared memory device, specific data validity information indicating validity of data that are stored in the first shared memory device;
storing, by an entire data validity information storage of the first shared memory device, entire data validity information;
storing, by an entire on-line information storage of the first shared memory device, first specific on-line information and second specific on-line information;
determining, by a multiplexing guarantee checking unit of the first shared memory device, whether multiplexing of data stored among plural shared memory devices is guaranteed based on the information stored in the entire data validity information storage and the entire on-line information storage;
transmitting, by a specific data validity information transmitter of a second shared memory device, specific data validity information indicating validity of data that are stored by the second shared memory device;
storing, by an entire data validity information storage of the second shared memory device, entire data validity information;
storing, by an entire on-line information storage of the second shared memory device, first specific on-line information and second specific on-line information;
determining, by a multiplexing guarantee checking unit of the second shared memory device, whether multiplexing of data stored among plural shared memory devices is guaranteed based on the information stored in the entire data validity information storage and the entire on-line information storage;
transmitting, by an entire data validity information transmitter of a first information processing apparatus, the entire data validity information including the specific data validity information transmitted by the first shared memory device and the specific data validity information transmitted by the second shared memory device to the first and second shared memory devices;
transmitting, by an on-line information transmitter of the first information processing apparatus, the first specific on-line information, indicating whether the first information processing apparatus is on-line with the first shared memory device and the second shared memory device, to the first and second memory devices,
transmitting, by an entire data validity information transmitter of a second information processing apparatus, the entire data validity information including the specific data validity information transmitted by the first shared memory device and the specific data validity information transmitted by the second shared memory device to the first and second shared memory devices; and
transmitting, by an on-line information transmitter of the second information processing apparatus, the second specific on-line information, indicating whether the second information processing apparatus is on-line with the first shared memory device the second shared memory device, to the first and second memory devices.

9. The method according to claim 8, further comprising:
determining, by the multiplexing guarantee checking unit, a valid shared memory device, in which stored data are valid, based on the specific data validity information of the first shared memory device and the specific data validity information of the second shared memory device included in the entire data validity information stored in the entire data validity information storage,
determining, by the multiplexing guarantee checking unit, an off-line information processing apparatus that is off-line with all of the first and second shared memory devices based on the first specific on-line information and the second specific on-line information included in entire on-line information stored in the entire on-line information storage, and
determining, by the multiplexing guarantee checking unit, whether all the information processing apparatuses excluding the determined off-line information processing apparatus have a same on-line or off-line connection state with the first and second shared memory devices based on the first specific on-line information and the second specific on-line information, and
when it is determined that all the information processing apparatuses excluding the determined off-line information processing apparatus do not have the same on-line or off-line connection state, transmitting, by a device separation instruction transmitter of each of the first and second shared memory devices, instructions to set at least one of the first and second information processing apparatuses and the first and second shared memory devices to off-line, to the first and second information processing apparatuses so that all the information processing apparatuses excluding the determined off-line information processing apparatus have the same on-line or off-line connection state with the first and second shared memory devices.

10. The method according to claim 8,
wherein the specific data validity information transmitter of each of the first and second shared memory devices transmits, when a change of the specific data validity information is detected, the changed specific data validity information to the first and second information processing apparatuses,
wherein the entire data validity information storage of each of the first and second shared memory devices stores, when the entire data validity information is transmitted from the first or second information processing apparatus, the transmitted entire data validity information,
wherein the entire on-line information storage of each of the first and second shared memory devices stores, when the first specific on-line information is transmitted from the first information processing apparatus, the transmitted first specific on-line information, and stores, when the second specific on-line information is transmitted from the second information processing apparatus, the transmitted second specific on-line information, and
wherein the multiplexing guarantee checking unit of each of the first and second shared memory devices determines whether multiplexing of data stored among plural shared memory devices is guaranteed when the entire data validity information is transmitted, when the first or second specific on-line information is transmitted, or when off-line of the first or second information processing apparatus is detected.
